# EUROPEAN PATENT APPLICATION

(11) **EP 2 465 748 A2**
(43) Date of publication of application: **20.06.2012**
(21) Application number: 11194172.0
(22) Date of filing: 16.12.2011
(51) Int. Cl.: B62B 1/12

(54) **Wheel assemblies**

(30) Priority: 16.12.2010 US 424053 P; 17.12.2010 US 424478 P
(71) Applicant: DG Manufacturing, LLC, Wichita, KS 67226 (US)
(72) Inventor: Ryan, Paul, Wichita, KS Kansas 67230 (US); Wood, Robert Allen, Lincoln, NE Nebraska 68506 (US)
(74) Representative: Lunt, Mark George Francis

(57) **Abstract**

An assembly for attaching a first (251) and second (254) wheel adjacent an object (200) suitable for rolling movement, according to particular embodiments, comprises: (1) an axle (245) defining a first end and a second end defining at least one recess (282), (2) a clip (270) comprising a first clip portion defining an elongated channel, a second clip portion defining an opening, and a biasing mechanism that is adapted for biasing the first clip portion toward a first position. The first end of the axle is adapted for supporting the first wheel when the assembly is attached adjacent the object. The clip is adapted to facilitate maintaining the second wheel in a substantially fixed lateral position by positioning the second wheel adjacent the object and sliding the clip adjacent the axle's second end so that a portion of the clip defining the elongated channel engages the portion of the axle defining the recess.

## Description

### BACKGROUND

Wheel assemblies are often difficult and time consuming to assemble. Accordingly, there is a need for improved wheel assemblies that are relatively easy for a user to assemble.

### SUMMARY OF THE INVENTION

An assembly, according to various embodiments, is adapted for attaching a first wheel and a second wheel adjacent an object suitable for rolling movement when the object is at least partially supported by the first and second wheels. In particular embodiments, the assembly comprises: (1) an axle defining: (a) a first end that is adapted for supporting the first wheel when the assembly is attached adjacent the object; and (b) a second end that is adapted for supporting the second wheel when the assembly is attached adjacent the object; and (b) a clip that is adapted to facilitate maintaining the second wheel in a substantially fixed lateral position adjacent the object in which the second wheel is rotatably connected adjacent the object. In particular embodiments, the axle defines at least one axle recess adjacent its second end. In certain embodiments, the clip comprises: (1) a first clip portion defining an elongated channel, (2) a second clip portion defining an opening in the second portion, and (3) a biasing mechanism that is adapted for biasing the first clip portion toward a first position in which the opening is aligned with at least a portion of the elongated channel. In particular embodiments, the clip is adapted to allow a user to use the clip to facilitate maintaining the second wheel in the substantially fixed lateral position by executing one or more steps. In certain embodiments, the one or more steps include (1) positioning the second wheel adjacent the at least one axle recess; and (2) sliding the clip adjacent the second end so that: (a) a portion of the clip defining the elongated channel engages at least a portion of the axle defining the recess; and (b) at least a portion of the second end is disposed within the opening.

A method of attaching a first wheel and a second wheel adjacent an object suitable for rolling movement using an axle assembly comprises: (1) an axle defining a first end that is adapted for supporting the first wheel and a second end that defines at least one axle recess and is adapted for supporting the second wheel; and (2) a clip comprising a first clip portion defining an elongated channel, a second clip portion defining an opening in the second portion, and a biasing mechanism that is adapted for biasing the first clip portion toward a first position in which the opening is aligned with at least a portion of the elongated channel. In particular embodiments, the clip is adapted to facilitate maintaining the second wheel in a substantially fixed lateral position adjacent the object in which the second wheel is rotatably connected adjacent the object. In certain embodiments, the method comprises the steps of: (1) positioning the first wheel adjacent the first end such that the first end supports the first wheel adjacent the object; (2) positioning the second wheel adjacent the at least one axle recess; and (3) sliding the clip adjacent the second end so that: (a) a portion of the clip defining the elongated channel engages at least a portion of the axle defining recess; and (b) at least a portion of the second end is disposed within the opening.

### BRIEF DESCRIPTION OF THE DRAWINGS

Having described various embodiments in general terms, reference will now be made to the accompanying drawings, which are not necessarily drawn to scale, and wherein:
FIG. 1 is a front perspective view of a hand truck according to a first particular embodiment of the invention.
FIG. 2 is an exploded front perspective view of the hand truck of FIG. 1.
FIG. 3 is a side view of the body of the hand truck of FIG. 1.
FIG. 4 is a top view of the hand truck of FIG. 1.
FIG. 5 is a front perspective view of three hand truck bodies having the same structure as the hand truck body of FIG. 1. This figure shows the three hand truck bodies in a nested, mating configuration.
FIG. 6 is a side view of the three hand truck bodies of FIG. 5.
FIG. 7 is a front perspective view of a hand truck according to a further embodiment of the invention.
FIG. 8 is a front perspective exploded view of the hand truck body of FIG. 7.
FIG. 9 is a side view of the hand truck body shown in FIG. 8.
FIG. 10 is a top view of the hand truck shown in FIG. 7.
FIG. 11 is a front perspective view of three hand truck bodies having the same structure as the hand truck body of FIG. 8. This figure shows the three hand truck bodies in a nested, mating configuration.
FIG. 12 is a side view of the three hand truck bodies of FIG. 11.
FIG. 13 is a front perspective view of a hand truck according to a further embodiment of the invention.
FIG. 14 is a front perspective view of the hand truck of FIG. 13 with its wheels and axle removed.
FIG. 15 is a side view of the hand truck body of FIG. 13.
FIG. 16 is a top view of the hand truck body of FIG. 13.
FIG. 17 is a front perspective view of three hand truck bodies having the same structure as the hand truck body of FIG. 13. This figure shows the three hand truck bodies in a nested, mating configuration.
FIG. 18 is a top view of the three hand truck bodies of FIG. 17.
FIG. 19 is a side view of the three hand truck bodies of FIG. 17.
FIG. 20 is a front perspective view of a hand truck body according to yet another embodiment in a first orientation.
FIG. 21 is an exploded front perspective view of the hand truck of FIG. 20.
FIG. 22 is a front perspective view of the hand truck of FIG. 20 in a second orientation.
FIG. 23 is a front perspective view of three hand truck bodies having the same structure as the body of the hand truck shown in FIG. 20. This figure shows the three hand truck bodies in a nested, mating configuration.
FIG. 24 is a top view of the three hand truck bodies of FIG. 23.
FIG. 25 is a side view of the three hand truck bodies of FIG. 23.
FIG. 26 is a front perspective view of a hand truck according to a second particular embodiment of the invention.
FIG. 27 is a front perspective exploded view of the hand truck of FIG. 26.
FIG. 28 is a front perspective view of three hand truck bodies having the same structure as the body of the hand truck of FIG. 26. This figure shows the three hand truck bodies in a nested, mating configuration.
FIG. 29 is a front perspective view of a hand truck body according to yet another embodiment of the invention.
FIG. 30 is an exploded front perspective view of the hand truck body of FIG. 29.
FIG. 31 is a front perspective view of three hand truck bodies having the same structure as the body of the hand truck of FIG. 29. This figure shows the three hand truck bodies in a nested, mating configuration.

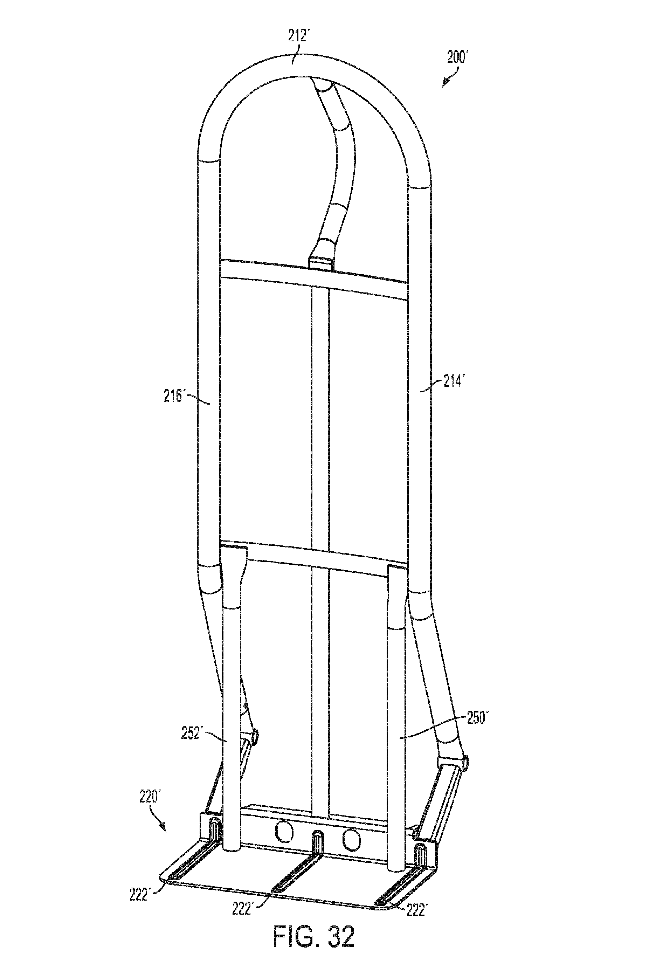

FIG. 32 is a front perspective view of a hand truck body according to a further embodiment of the invention.
FIG. 33 is a front perspective view of three hand truck bodies having the same structure as the hand truck body of FIG. 32. This figure shows the three hand truck bodies in a nested, mating configuration.
FIG. 34 is a perspective view of a shipping container containing the hand truck bodies of FIG. 1 in a nested, mating configuration.
FIG. 35 is a perspective view of a shipping container full of the hand truck bodies of FIG. 1 in a nested, mating configuration.
FIG. 36 is a perspective view of a shipping container full of the hand trucks of FIG. 1 in a fully assembled configuration.
FIG. 37 is a perspective exploded view of a hand truck according to a particular embodiment.
FIG. 38 is a detail view of an axle of the hand truck of FIG. 37.
FIG. 39 is a detail view of a first end of the axle of FIG. 38
FIG. 40 is a detail view of a second end of the axle of FIG. 38.
FIG. 41 is a rear detail view of a clip of the hand truck of FIG. 37.
FIGS. 42-48 are perspective views of the progressive steps of assembling a wheel assembly of the hand truck of FIG. 37.
FIG. 49 is a front view of a hand truck bay.
FIG. 50 is a side view of the hand truck bay of FIG. 49.

### DETAILED DESCRIPTION OF VARIOUS EMBODIMENTS

Various embodiments will now be described more fully hereinafter with reference to the accompanying drawings, in which various relevant embodiments are shown. The invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

### Overview of Various Hand Truck Designs

### First Exemplary Hand Truck

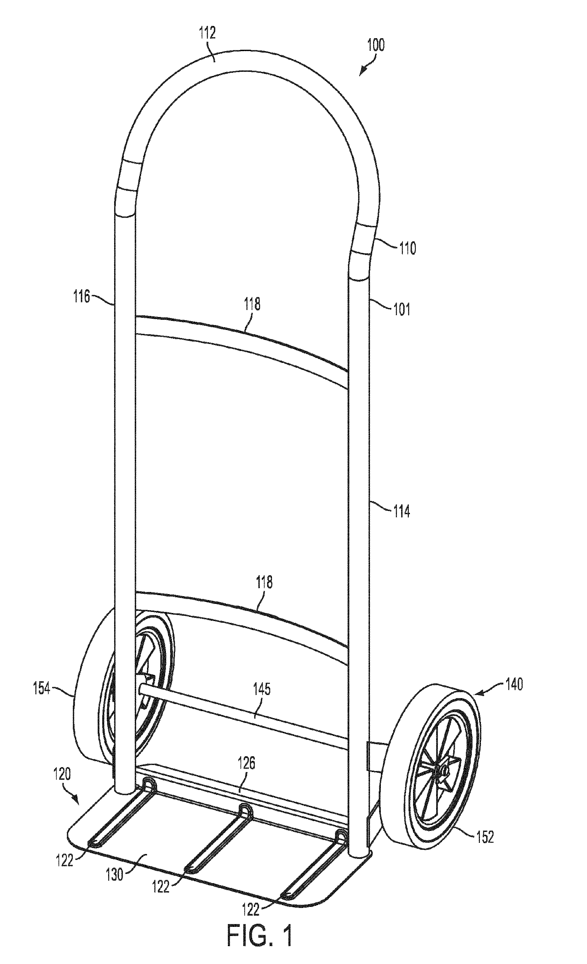

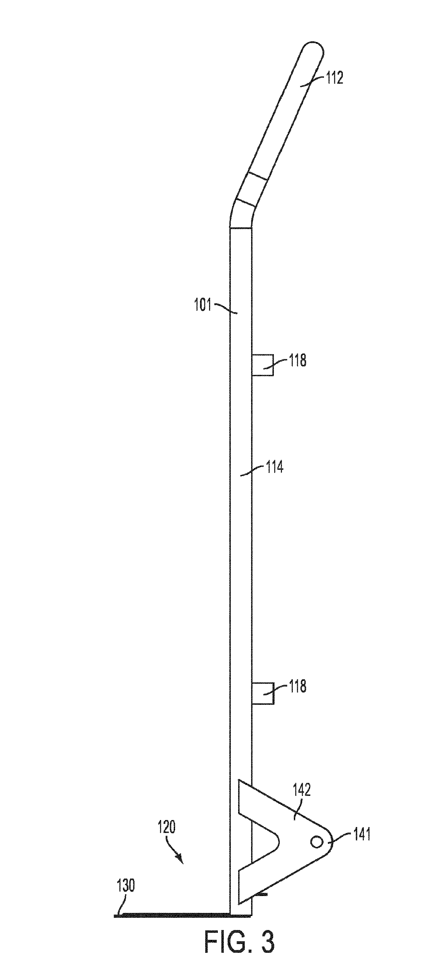

An exemplary hand truck according to a particular embodiment is shown in FIGS. 1-6. In this embodiment, the hand truck **100** comprises: (1) a frame **110**; (2) a nose plate **120**; and (3) a wheel assembly **140.** These various components are discussed in greater detail below.

### Frame

The hand truck **100** may include any suitable type of frame **110.** In the embodiment shown in FIG. 1, this frame **110** includes: (1) a first side frame rail **114** (which, in this embodiment, is a substantially straight, elongated frame member that is adapted to stand in a substantially vertical orientation when the hand truck **100** is in an upright position); (2) a second side frame rail **116** (which, in this embodiment, is a substantially straight, elongated frame member that is adapted to stand in a substantially vertical orientation when the hand truck **100** is in an upright position); (3) a U-shaped connector **112** that connects the respective top ends of the first and second side frame rails **114, 116;** and (4) a plurality of crossbars **118** that extend between, and physically connect, the first and second side frame rails **114, 116.**

The various components of the frame **110** may be made of any suitable (preferably sturdy) material (e.g., a suitable metal such as aluminum or steel, or plastic). These components are secured together using any suitable combination of fasteners or welding techniques to provide a rigid frame for the hand truck **100**.

### Nose Plate

The hand truck **100** may include any suitable type of nose plate **120**. As shown in FIG. 1, the nose plate **120** may include: (1) a substantially planar support plate **130** extending forward from the frame **110**; and (2) a substantially planar face plate **126** that extends upwardly adjacent a rear edge of the support plate **130**. In various embodiments, the support plate 130 may define one or more elongated ribs **122** in its top surface. As discussed in greater detail below, these ribs **122** correspond to elongated recesses in the support plate's s bottom surface. In particular embodiments, the ribs **122** serve to provide additional strength to the support plate **130,** and may also facilitate nesting the hand truck's body **101** (e.g., the structure of the hand truck **100** other than the hand truck's axle **145** and wheels **152, 154**) with like hand truck bodies. The nose plate **120** may be attached to the lower end of the hand truck's frame **110** in any suitable manner (e.g., using suitable fasteners or welding techniques).

### Wheel Assembly

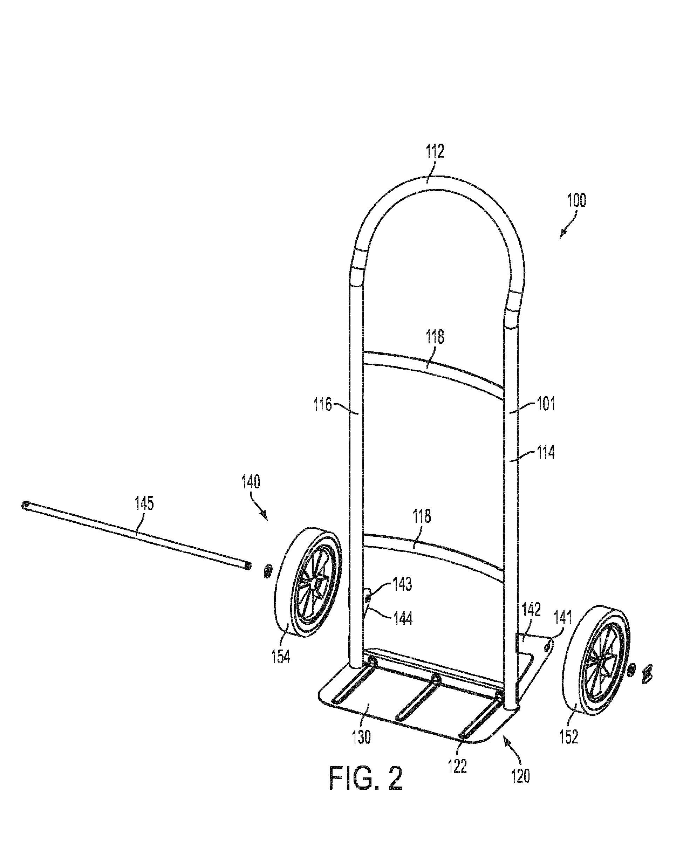

In particular embodiments, the hand truck's wheel assembly **140** is adapted for facilitating the movement of the hand truck **100** relative to a support surface. In the embodiment shown in FIG. 2, the wheel assembly **140** includes a first axle support **142** that extends outwardly and rearwardly adjacent the lower end of the first side frame rail **114** and a second axle support **144** that extends outwardly and rearwardly adjacent the lower end of the second side frame rail **116.** The first and second axle supports **142**, **144** each respectively define a substantially circular hole **141**, **143** adjacent their distal end.

The hand truck **100** further includes an elongated axle **145** that extends through the holes **141**, **143** in the first and second axle supports **142**, **144** so that the axle **145** is substantially parallel to a support surface that supports the hand truck **100** when the hand truck **100** is in an upright orientation. The wheel assembly **140** further includes a pair of wheels **152**, **154** that are rotatably mounted, respectively, to opposite ends of the axle **145**.

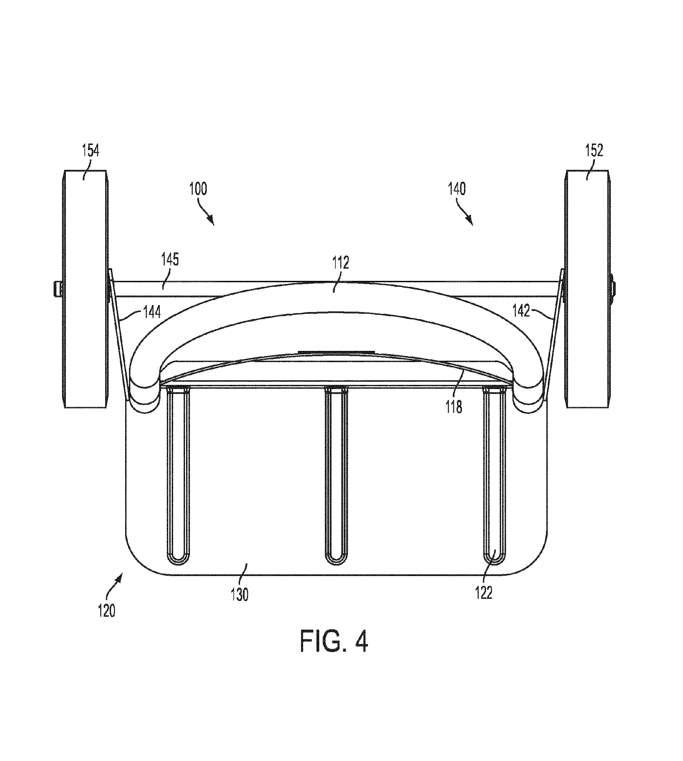

In particular embodiments, the first axle support **142** is in the shape of a substantially planar trapezoid with the first axle support's proximal end being the trapezoid's larger parallel side. Similarly, the second axle support **144** is in the shape of a substantially planar trapezoid with the second axle support's proximal end being the trapezoid's larger parallel side. As may be understood form FIG. 4, in particular embodiments, the first and second axle supports **142**, **144** are flared away from each other so that the axle supports' respective proximal ends are closer to each other than the axle supports' respective distal ends.

### Nesting Multiple First Exemplary Hand TruckBodies

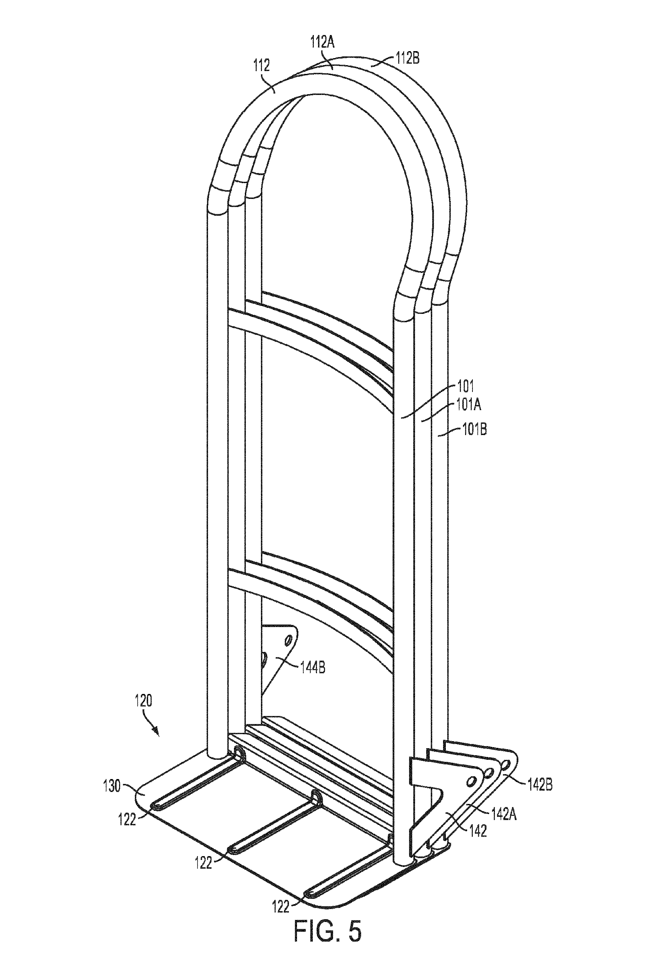

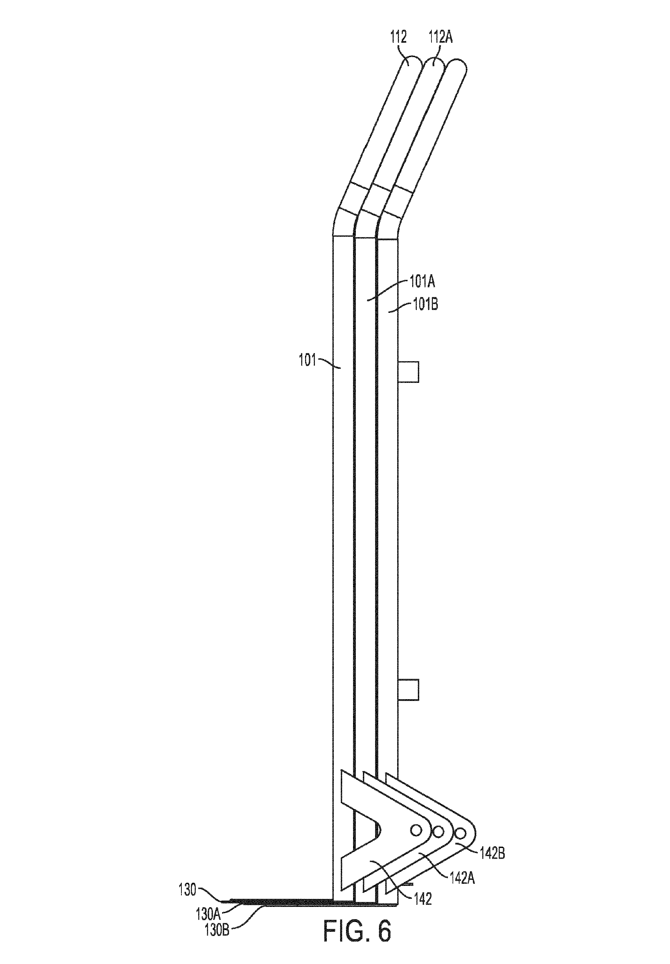

In various embodiments, the body **101** of the first exemplary hand truck **100** is adapted to nest with hand truck bodies having a structure that is the same as, or substantially similar to, the structure of the first exemplary hand truck body **101** (e.g., with "like" hand truck bodies). As may be understood from FIGS. 5 and 6, the first and second axle supports **142**, **144** are adapted for facilitating moving two like hand truck bodies **101**, **101A** into a mating relationship. In particular, the flared positioning of the first **142** and second **144** axle supports serves to guide the first hand truck body **101** into the correct lateral mating orientation with the second hand truck body **101A** as: (1) the respective inside surfaces of the first hand truck body's first **142** and second **144** axle supports engage the respective outside surfaces of the second hand truck body's first **142A** and second (not pictured) axle supports; and (2) the first hand truck body **101** is moved toward the second hand truck body **101A**.

FIGS. 5 and 6 show three like hand truck bodies **101**, **101A-101B** in a nested, mating relationship. The hand truck bodies **101**, **101A-101B** are dimensioned so that, when the hand truck bodies **101**, **101A-101B** are positioned in a nested, mating relationship as shown in FIG. 5: (1) the rear portion of the front hand truck body (e.g., hand truck body **101**) engages, and at least substantially mates with (e.g., entirely mates with), the front portion of the rear hand truck body (e.g., hand truck body **101A**); (2) as may be understood from FIG. 6, the inner surfaces of the first axle support **142** and second axle support (not pictured) of the front hand truck body **101** at least substantially mate with (e.g., entirely mate with), the outer surfaces of the first axle support **142A** and second axle support **144** of the rear hand truck body (e.g., hand truck body **101A**); (3) as shown in FIG. 6, the lower surface of the front hand truck body's support plate **130** engages, and at least substantially mates with (e.g., entirely mates with) the upper surface of the rear hand truck body's support plate **130A**. For example, the various recesses defined in the lower surface of the front hand truck body's support plate **130** may substantially mate with respective ribs **122** defined in the upper surface of the rear hand truck body's support plate **130A**; (4) as shown in FIG. 5, the rear surface of the U-shaped connector **112** of the front hand truck body **101** at least substantially mates with (e.g., entirely mates with) the front surface of the rear hand truck body's U-shaped connector **112A**.

Although FIGS. 5 and 6 show the hand truck bodies **101**, **101A-101B** in a nested, mating relationship in which there is nothing between the various hand truck bodies **101**, **101A-101B**, it should be understood that the hand truck bodies **101**, **101A-101B** nest with like hand truck bodies with one or more objects positioned between the respective hand truck bodies. For example, in particular embodiments, marketing literature or a kit (e.g., a relatively thin kit) that includes one or more hand truck components (e.g., wheels and an axle for the hand truck) may be positioned between the hand truck bodies while the hand truck bodies are in a substantially nested relationship.

### Second Exemplary Hand Truck

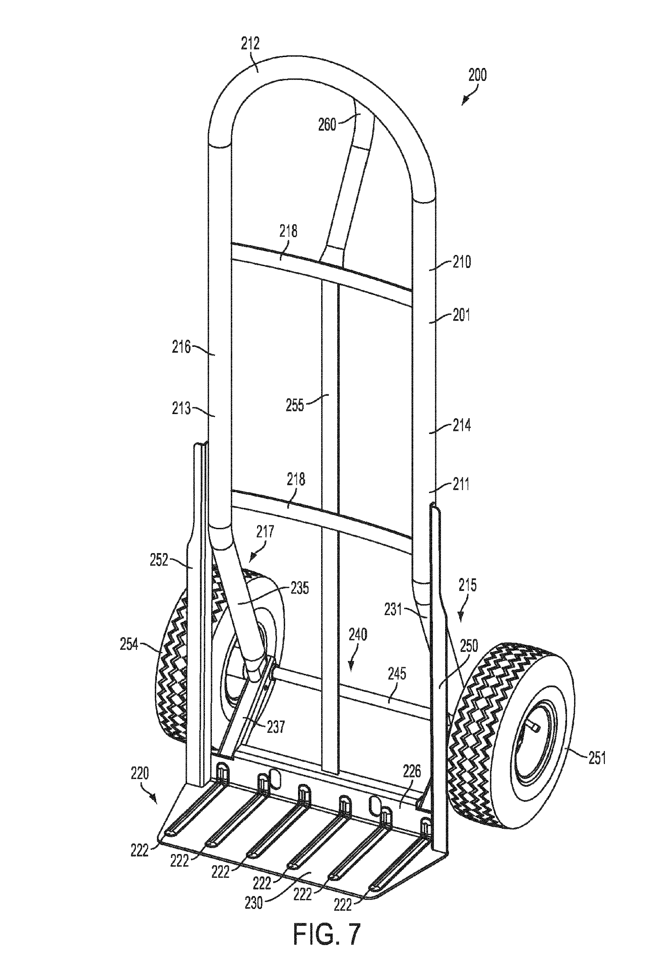

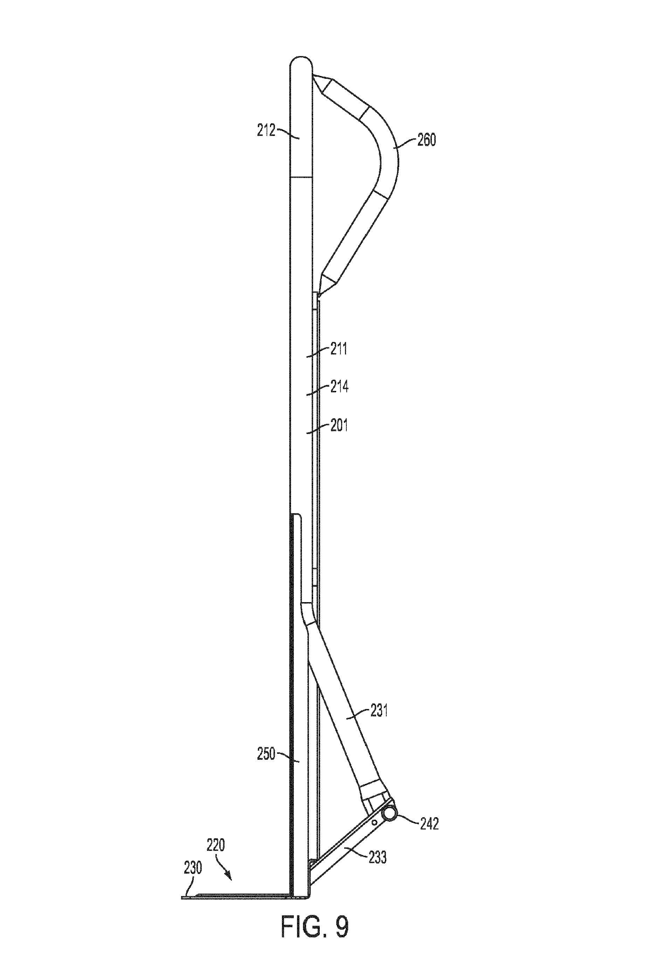

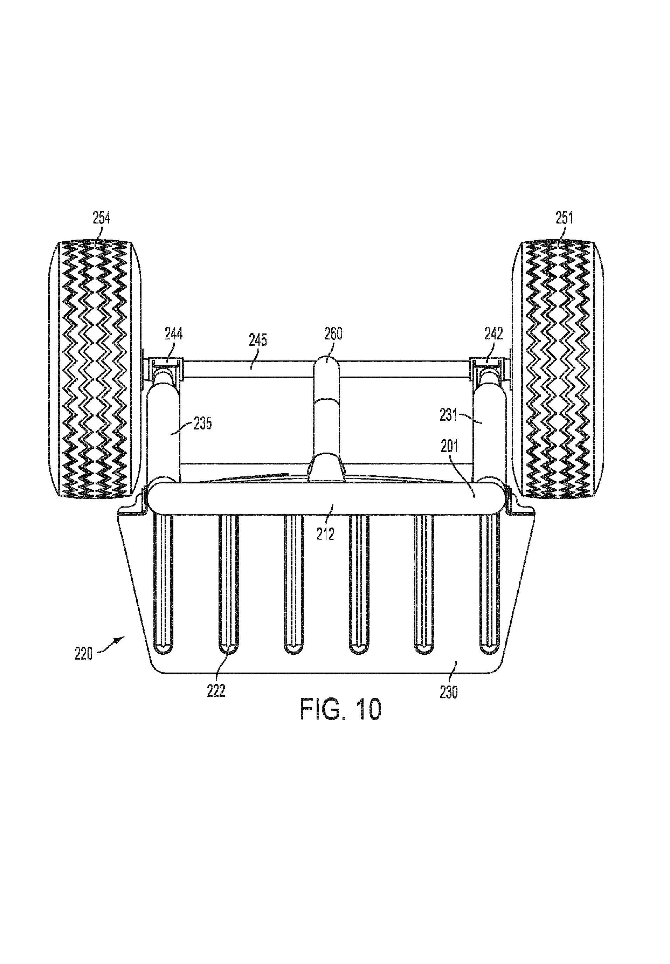

An exemplary hand truck according to a further embodiment is shown in FIGS. 7-12. In this embodiment, the hand truck **200** comprises: (1) a frame **210**; (2) a nose plate **220**; and (3) a wheel assembly **240**. These various components are discussed in greater detail below.

### Frame

The hand truck **200** may include any suitable type of frame **210.** In the embodiment shown in FIG. 7, this frame **210** includes: (1) a first side frame rail **214**; (2) a second side frame rail **216;** (3) an upper connecting portion **212** that connects the respective top ends of the first and second side frame rails **214, 216;** (4) a plurality of crossbars **218** that extend between, and physically connect, the first and second side frame rails **214, 216;** (5) an elongated, substantially planar central support **255** that extends between the upper cross bar **218** and a rear middle edge of the nose plate **220**; (6) a handle **260** that extends in a rearwardly directed arch between the upper portion of the central support **255** and the central portion of the upper connecting portion **212** as shown in FIG. 7; (7) a first elongated exterior support **250** that extends between the lower end of the upper portion **211** of the first side frame rail **214** and a first upper surface of the support plate **230;** and (8) a second elongated exterior support **252** that extends between the lower end of the upper portion **213** of the second side frame rail **216** and a second upper surface of the support plate **230**.

In the embodiment shown in FIG. 7, the first side frame rail **214** includes: (1) a substantially straight, elongated upper portion **211** that is adapted to stand in a substantially vertical orientation when the hand truck **200** is in an upright position; and (2) a first rearwardly extending angled axle support assembly **215** that extends between the lower end of the first side frame rail's elongated upper portion **211** and the first lateral side of the support plate **230**.

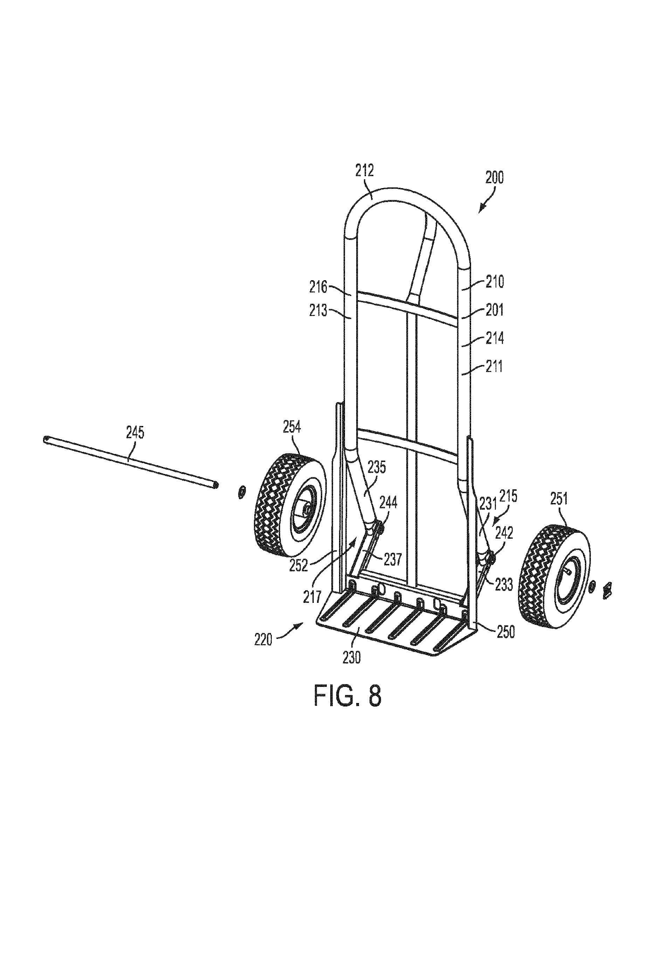

In the embodiment shown in FIG. 8, the first axle support assembly **215** comprises: (1) an elongated upper support member **231** that extends rearwardly and downwardly from the lower end of the first side frame rail's elongated upper portion **211**; (2) an elongated lower support member **233** that extends rearwardly and upwardly from the first lateral side of the support plate **230**; and (3) a first axle support **242** that is positioned at a vertex of an angle formed by the upper and lower support members **231**, **233**. In particular embodiments, the first axle support **242** is an elongated tube that is adapted for physically supporting a portion of an axle **245**.

In particular embodiments of the disclosed technology, the upper support member **231** and lower support member **233** form an angle of between about 50 and about 90 degrees. Also, in various embodiments, such as the embodiment shown in FIG. 8, the upper and lower support members **231**, **233** are positioned in a plane that is at least substantially perpendicular to (e.g., perpendicular to) the plane that includes the respective upper portions of the hand truck's first and second side frame rails **211**, **213**.

As shown in FIG. 7, the first exterior support **250** extends at least substantially vertically (e.g., vertically) when the hand truck **200** is in an upright orientation. In particular embodiments, the first exterior support **250** is positioned immediately adjacent the exterior lateral side of the first axle support assembly **215**. Similarly, the second exterior support **252** extends at least substantially vertically (e.g., vertically) when the hand truck **200** is in an upright orientation. In particular embodiments, the second exterior support **252** is positioned immediately adjacent the exterior lateral side of the second axle support assembly **217**.

**In** particular embodiments, the second side frame rail **216** includes: (1) a substantially straight, elongated upper portion **213** that is adapted to stand in a substantially vertical orientation when the hand truck **200** is in an upright position; and (2) a second rearwardly extending angled axle support assembly **217** that extends between the lower end of the second side frame rail's elongated upper portion **213** and the second lateral side of the support plate **230.**

In the embodiment shown in FIGS. 7 and 8 the second axle support assembly **217** comprises: (1) an elongated upper support member **235** that extends rearwardly and downwardly from the lower end of the second side frame rail's elongated upper portion **213**; (2) an elongated lower support member **237** that extends rearwardly and upwardly from the second lateral side of the support plate **230**; and (3) a second axle support **244** that is positioned at a vertex of an angle formed by the second upper and lower support members **235, 237.** In particular embodiments, the second axle support **244** is an elongated tube that is adapted for physically supporting a portion of the axle **245**.

In particular embodiments of the disclosed technology, the upper support member **235** and lower support member **237** form an angle of between about 50 and about 90 degrees. Also, in various embodiments, such as the embodiment shown in FIG. 8, the upper and lower support members **235, 237** are positioned in a plane that is at least substantially perpendicular to (e.g., perpendicular to) the plane that includes the respective upper portions of the first and second side frame rails **214, 216.**

The various components of the frame **210** may be made of any suitable (preferably sturdy) material (e.g., a suitable metal such as steel or aluminum, or plastic). These components are secured together using any suitable combination of fasteners or welding techniques to provide a rigid frame for the hand truck **200**.

### Nose Plate

The hand truck **200** may include any suitable type of nose plate **220.** As shown in FIG. 7, the nose plate **220** may include: (1) a substantially planar support plate **230** extending forward from the frame **210**; and (2) a substantially planar face plate **226** that extends upwardly adjacent a rear edge of the support plate **230**. In various embodiments, the support plate **230** may define one or more elongated ribs **222** in its top surface. As discussed in greater detail below, these ribs **222** correspond to elongated recesses in the support plate's s bottom surface. In particular embodiments, the ribs **222** serve to provide additional strength to the support plate **230**, and may also facilitate nesting the hand truck body **201** with similar hand truck bodies. The nose plate **220** may be attached to the lower end of the frame **210** in any suitable manner (e.g., using suitable fasteners or welding techniques).

### Wheel Assembly

In particular embodiments, the wheel assembly **240** is adapted for facilitating the movement of the hand truck **200** relative to a support surface. In the embodiment shown in FIG. 8, the wheel assembly **240** includes: (1) the first rearwardly extending angled axle support assembly **215**; (2) the second rearwardly extending angled axle support assembly **217**; (3) an elongated hand truck axle **245** that extends through the first and second axle supports **242**, **244** so that the axle **245** is substantially parallel to a support surface that supports the hand truck **200** when the hand truck **200** is in an upright orientation; and (4) a pair of wheels **251**, **254** that are rotatably mounted, respectively, to opposite ends of the axle **245**.

### Nesting Multiple Second Exemplary Hand Truck Bodies

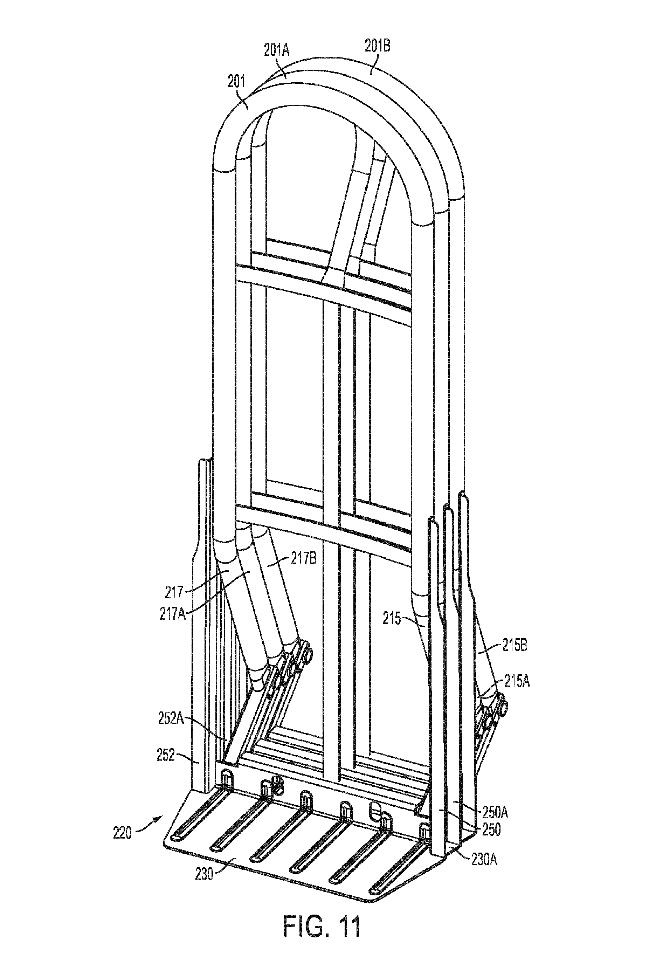

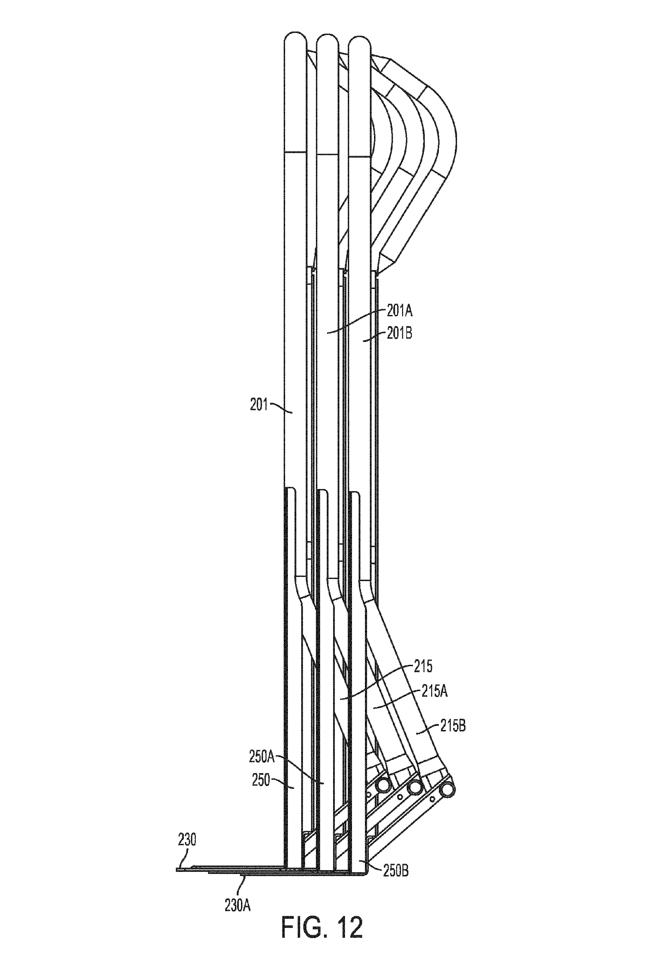

In various embodiments, the body **201** of the second exemplary hand truck **200** is adapted to nest with hand truck bodies having a structure that is the same as, or substantially similar to, the structure of the second exemplary hand truck body **201** (e.g., with "like" hand truck bodies). As may be understood from FIGS. 11 and 12, the first and second angled axle support assemblies **215, 217** and first and second exterior supports **250, 252** are adapted for facilitating moving two like hand truck bodies **201, 201A** into a nested, mating relationship. In particular, as may be understood from 11 and 12: (1) the angled, rearwardly extending first and second angled axle support assemblies **215A**, **217A** of a hand truck body **201A** each respectively form a recess for receiving the corresponding first or second angled axle support assembly **215**, **217** of a like hand truck body **201**; (2) the first exterior support **250A** is adapted to engage the exterior surface of the like hand truck body's first angled axle support assembly **215**; and (3) the second exterior support **252A** is adapted to engage the exterior surface of the like hand truck body's second angled axle support assembly **217**. This serves to: (1) facilitate guiding the two like hand truck bodies into a nested, mating relationship (e.g., as shown in 11); and (2) maintain the nested, like hand truck bodies in a nested, mating relationship (e.g., while the hand truck bodies are being transported).

FIGS. 11 and 12 show three like hand truck bodies **201**, **201A-201B** in a nested, mating relationship. As shown in this figure, in this embodiment, the hand truck bodies **201**, **201A-201B** are dimensioned so that, when the hand truck bodies **201**, **201A-201B** are positioned in a nested, mating relationship: (1) the rear portion of the body of the front hand truck (e.g., hand truck body **201**) engages, and at least substantially mates with (e.g., entirely mates with), the front portion of the body of the rear hand truck body (e.g., hand truck body **201A**); (2) the outer surfaces of the first and second angled axle support assemblies **215**, **217** of the front hand truck body (e.g., hand truck body **201**) at least substantially mate with (e.g., entirely mate with), the inner surfaces of the first and second angled axle support assemblies **215A, 217A** of the rear hand truck body (e.g., hand truck body **201A**); (3) the lower surface of the front hand truck body's support plate **230** engages, and at least substantially mates with (e.g., entirely mates with), the upper surface of the rear hand truck body's support plate **230A.** For example, the various recesses in the lower surface of the front hand truck body's support plate **230** may substantially mate with respective ribs defined in the upper surface of the rear hand truck body's support plate **230A.** As a result, the nesting of the like hand truck bodies and the like axle support assemblies may restrict the lateral movement of the hand trucks.

### Third Exemplary Hand Truck

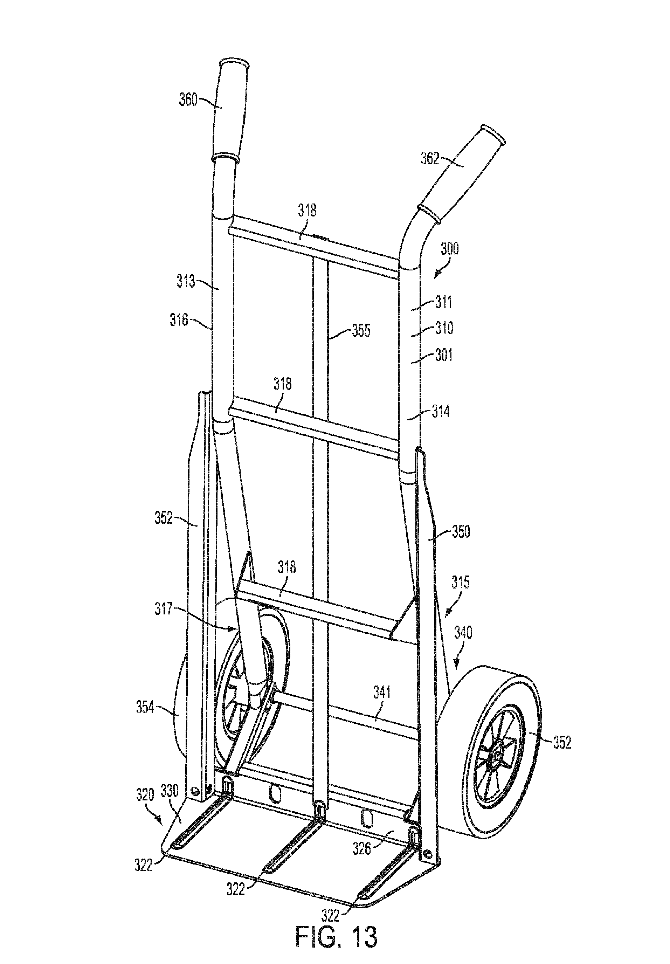

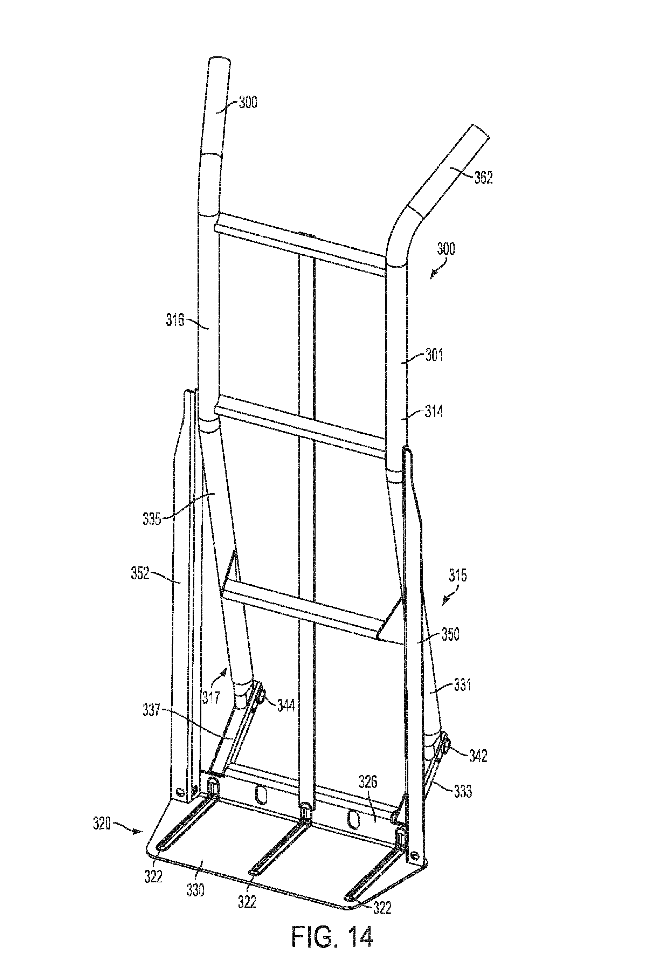

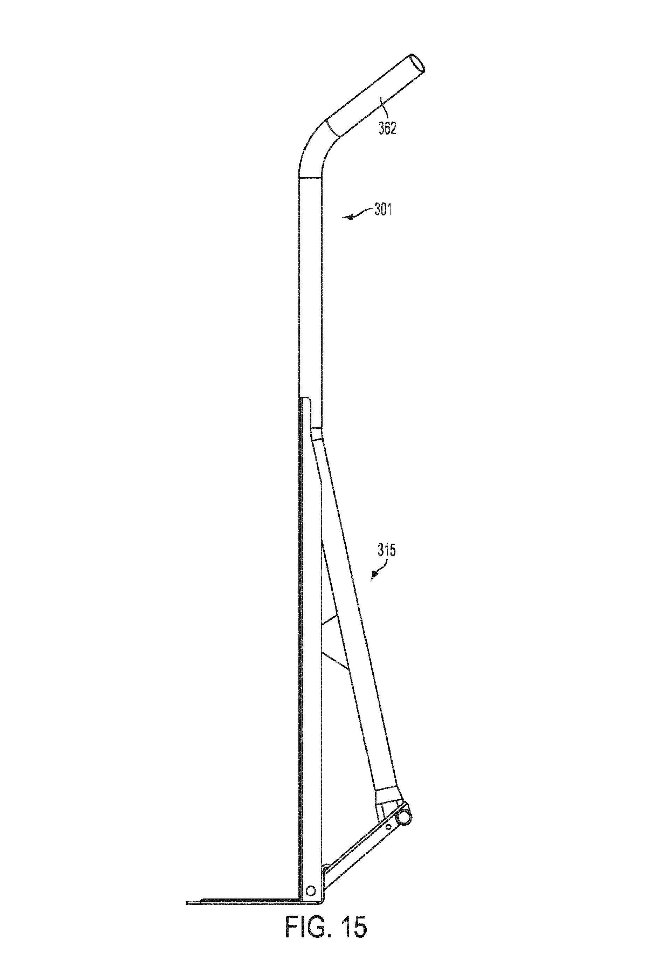

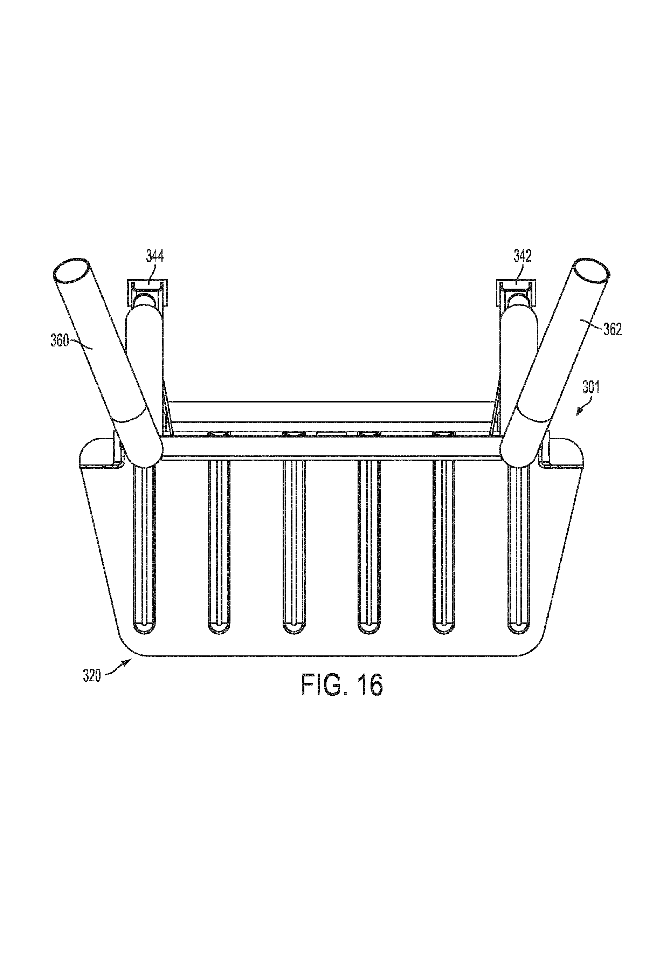

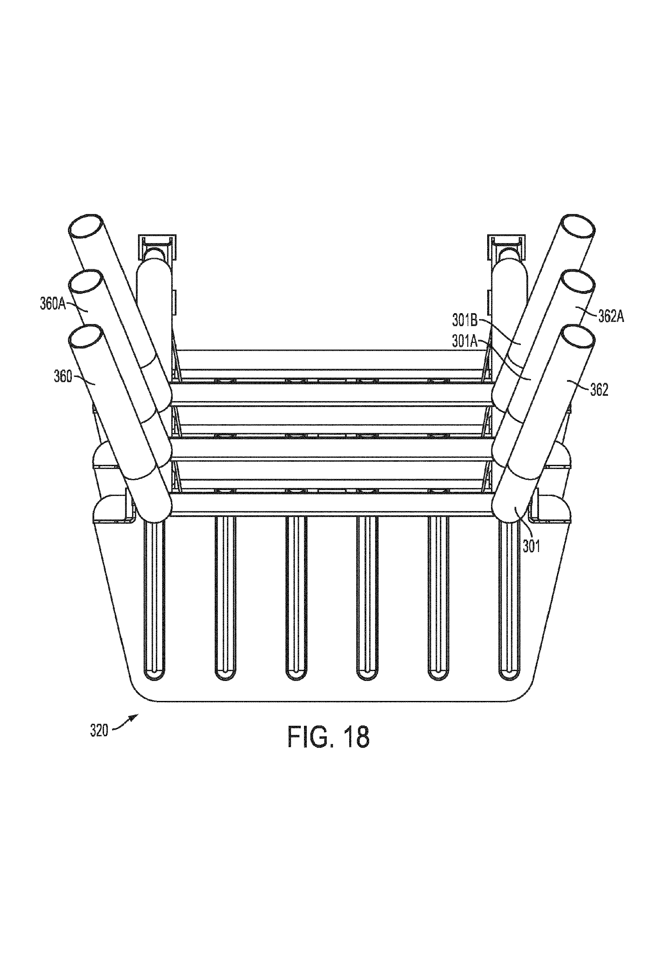

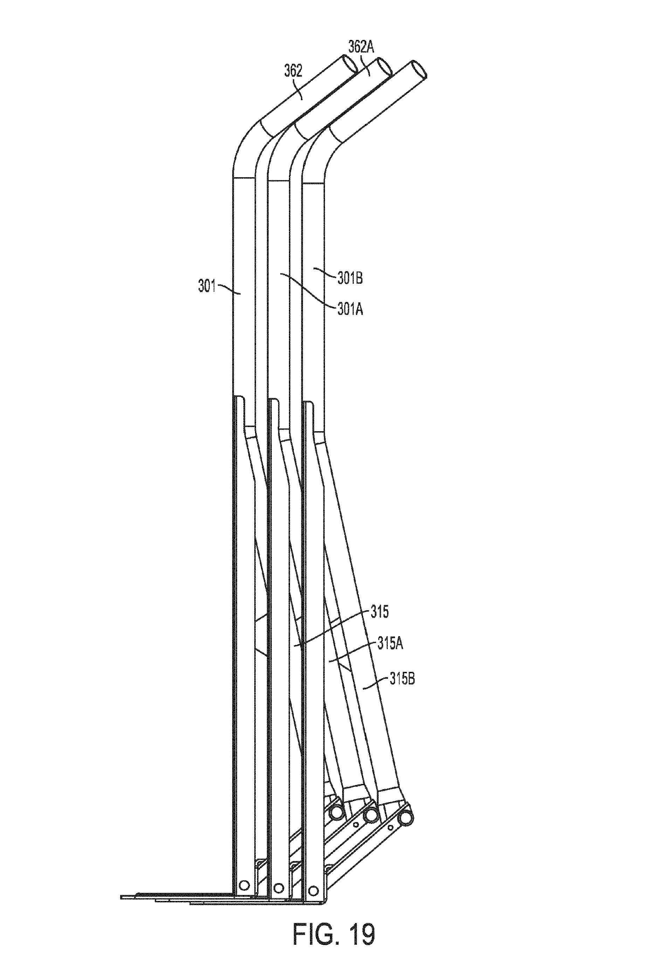

An exemplary hand truck according to a further embodiment is shown in FIGS. 13-19. In this embodiment, the hand truck **300** comprises: (1) a frame **310**; (2) a nose plate **320**; and (3) a wheel assembly **340**. These various components are discussed in greater detail below.

### Frame

The hand truck **300** may include any suitable type of frame **310**. In the embodiment shown in FIG. 13, the frame **310** is substantially structurally similar (e.g., identical) to the frame **210** of the embodiment of the hand truck **200** shown in FIG. 7 without the handle **260** or upper connecting portion **212**. In the embodiment of a hand truck **300** shown in FIG. 13, the frame **310** further comprises a first handle **362** that extends upwardly from an upper end of the first side frame rail **314** and a second handle **360** that extends upwardly from an upper end of the second side frame rail **316**.

### Nose Plate

In the embodiment shown in FIG. 13, the hand truck **300** includes a nose plate **320** that is substantially structurally similar (e.g., identical) to the nose plate **220** of the embodiment of a hand truck **200** shown in FIG. 7.

### Wheel Assembly

In the embodiment shown in FIG. 13, the hand truck **300** also includes a wheel assembly **340** that is substantially structurally similar (e.g., identical) to the wheel assembly **240** of the embodiment of a hand truck **200** shown in FIG. 7.

### Nesting Multiple Third Exemplary Hand Truck Bodies

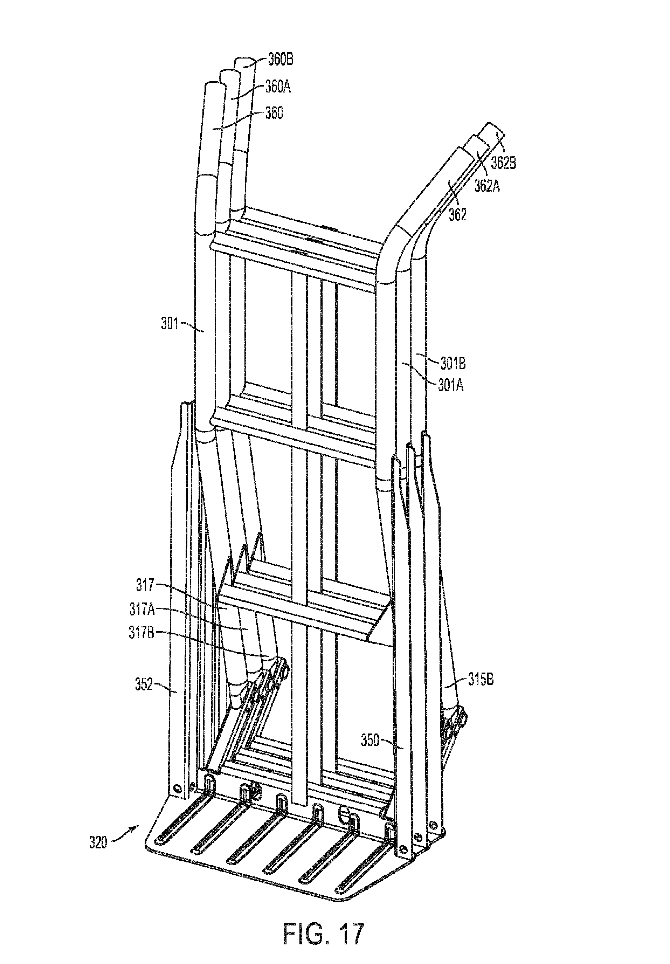

In various embodiments, the body **301** of the third exemplary hand truck **300** is adapted to nest with hand truck bodies having a structure that is the same or substantially similar to the structure of the third exemplary hand truck body **301** (e.g., with "like" hand truck bodies). As may be understood from FIG. 17, the hand truck body **301** is adapted to nest with like hand truck bodies in substantially the same manner as the hand truck body **201** of FIG. 7 is adapted to nest with like hand truck bodies

FIG. 17 shows three like hand truck bodies **301, 301A-301B** in a nested, mating relationship. As may be understood from FIGS. 17-19, in this embodiment, the hand truck bodies **301**, **301A-301B** are dimensioned so that, when the hand truck bodies **301, 301A-301B** are positioned in a nested, mating relationship, the rear portion of the first **362** and second **360** handles of the front hand truck body **301** at least substantially mate with (e.g., entirely mate with) the front of the first **362A** and second **360A** handles of the rear hand truck body **301A.**

### Fourth Exemplary Hand Truck

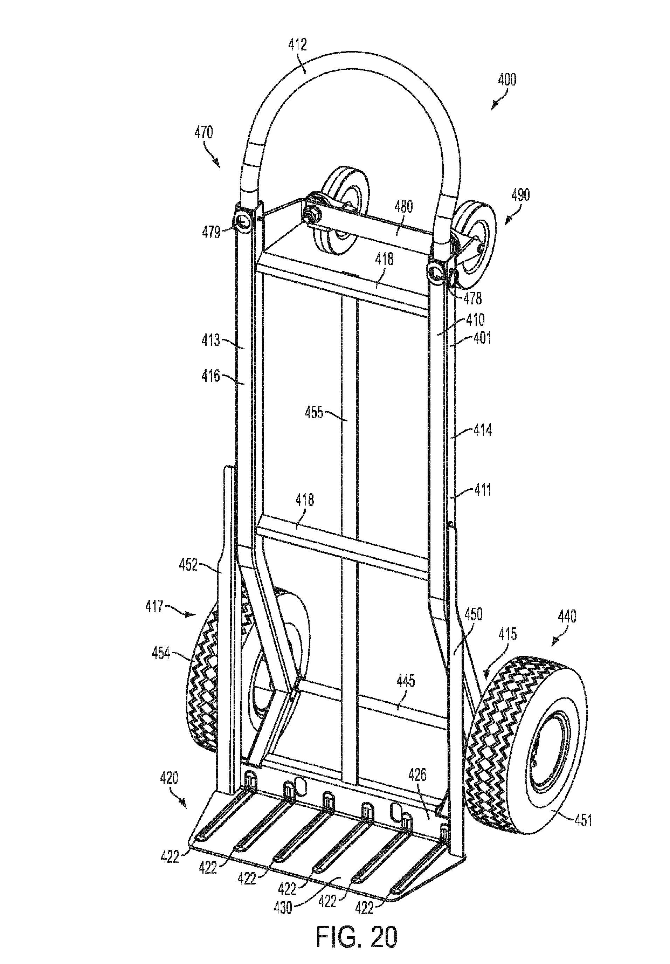

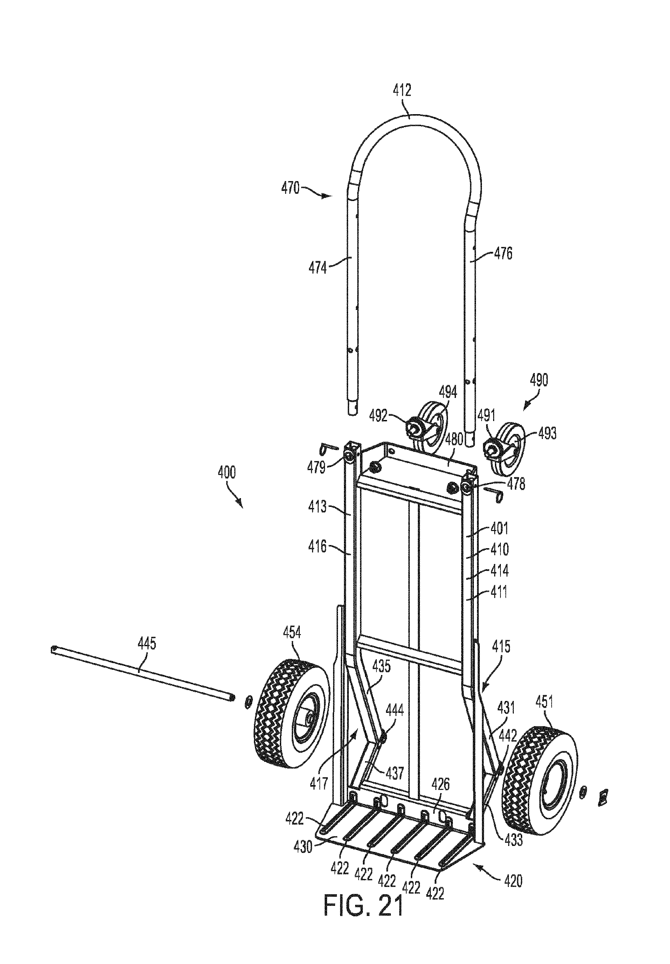

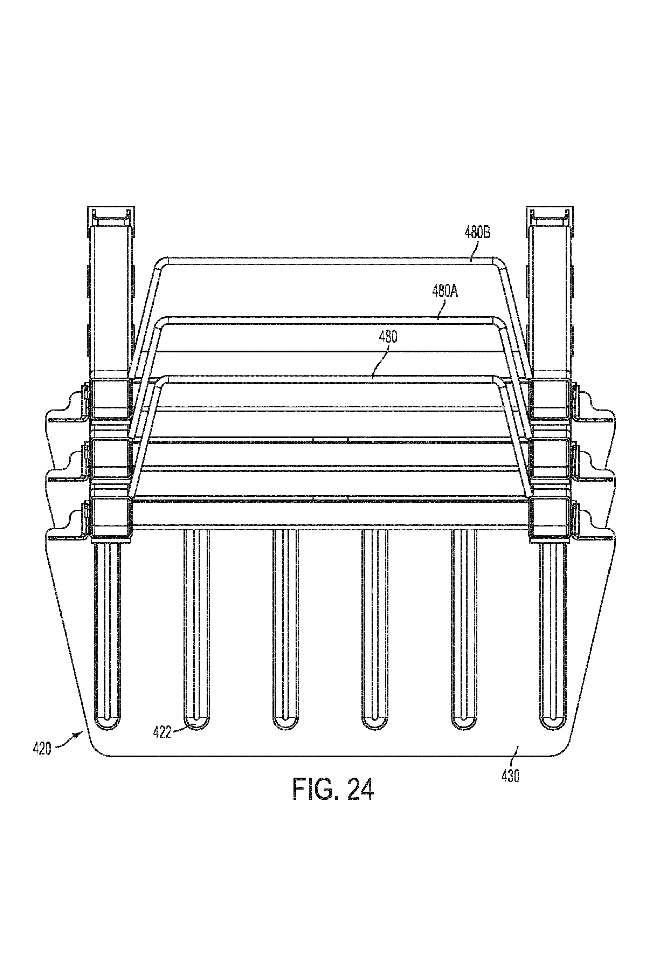

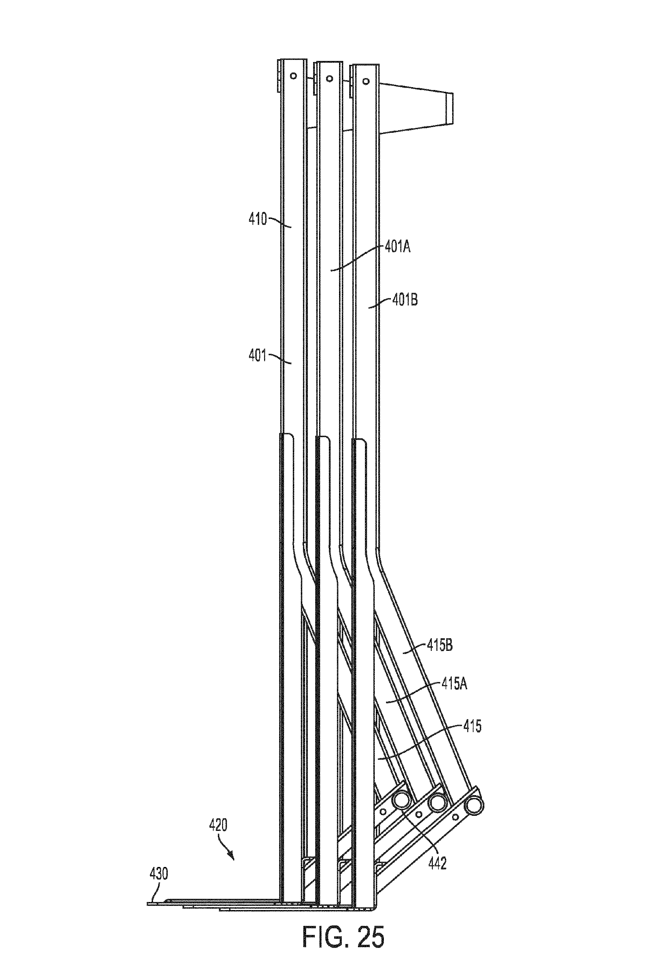

A fourth exemplary hand truck **400** is shown in FIGS. 20 - 25. As may be understood from these figures, the body of this hand truck **400** is, generally speaking, a convertible version of the hand truck body **200** shown in FIG. 7. In this embodiment, the hand truck **400** comprises: (1) a frame **410**; (2) an upper handle assembly **470;** (3) a nose plate **420;** (4) a primary wheel assembly **440** (which is shown in FIG. 21 with the wheel assembly's axle **445** and wheels **451**, **454** removed for purposes of clarity); and (5) a secondary wheel assembly **490**. These various components are discussed in greater detail below.

### Frame

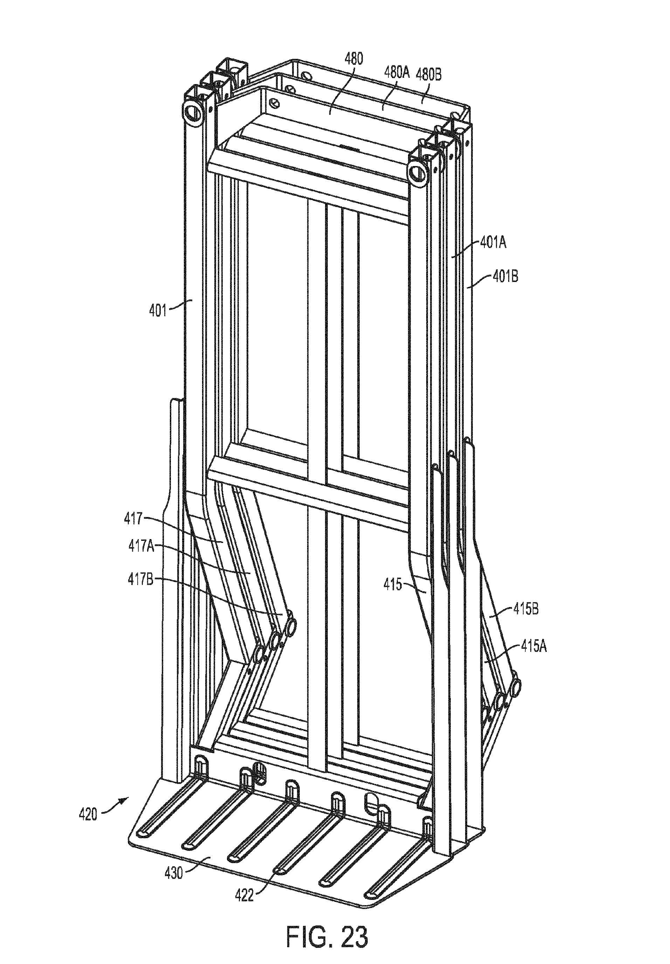

The hand truck **400** may include any suitable type of frame **410**. In the embodiment shown in FIGS. 20 and 23, the lower portion of the hand truck's frame **410** is structurally similar to (e.g., identical to) the frame **210** of the embodiment of the hand truck **200** shown in FIG. 7.

As shown in FIGS. 20-22, the first side frame rail **414**, in this embodiment, defines a first handle support **478** adjacent (e.g., to) an upper end of the front face of the first side frame rail **414**. In this embodiment, the first handle support **478** is adapted to structurally correspond to the bottom end of the first side handle rail **476** of the upper handle assembly **470.** When the hand truck **400** is in horizontal orientation (e.g., a cart orientation), the end of the first side handle rail **476** of the upper handle assembly **470** may be inserted into the first handle support **478** such that the first handle support **478** supports the first side handle rail **476** of the upper handle assembly **470** in a substantially vertical orientation.

As shown in FIGS. 20-22, the second side frame rail **416**, in this embodiment, includes a second handle support **479** adjacent (e.g., to) an upper end of the front face of the second side frame rail **416**. In this embodiment, the second handle support **479** is adapted to structurally correspond to the bottom end of the second side handle rail **474** of the upper handle assembly **470**. When the hand truck **400** is in a horizontal orientation (e.g., a cart orientation), the end of the second side handle rail **474** of the upper handle assembly **470** may be inserted into the second handle support **479** such that the second handle support **479** supports the second side handle rail **474** of the upper handle assembly **470** in a substantially vertical orientation.

The various components of the frame **410** may be made of any suitable (preferably sturdy) material (e.g., a suitable metal such as aluminum, or plastic). These components are secured together using any suitable combination of fasteners or welding techniques to provide a rigid frame for the hand truck **400**.

### Upper Handle Assembly

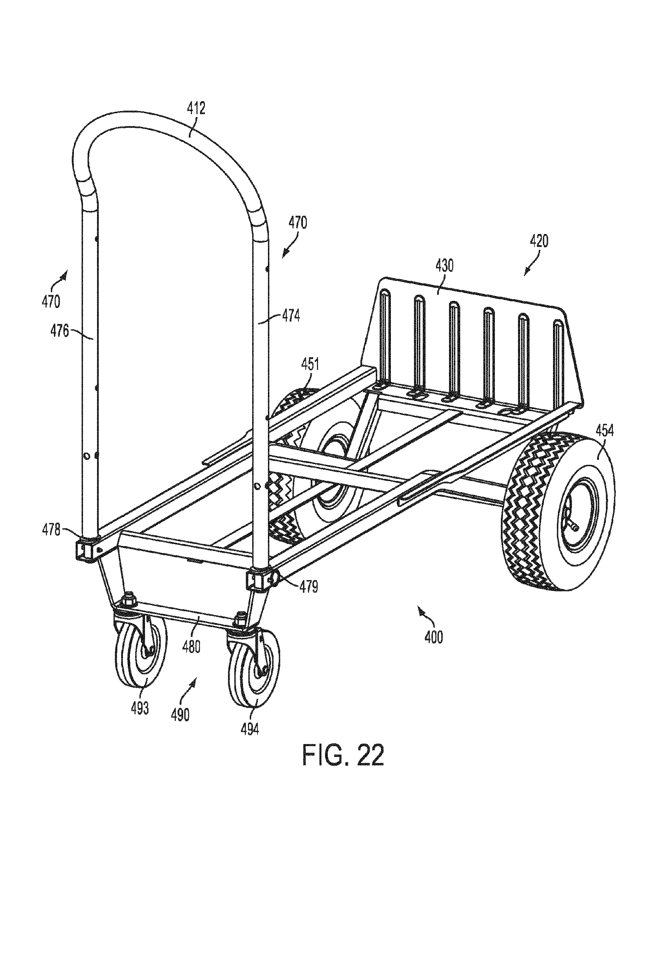

The hand truck **400** may include an upper handle assembly **470**. As may be understood from FIGS. 20-22, the upper handle assembly **470** is adapted to be selectively moved from: (1) a vertical position when the hand cart **400** is in a substantially vertical position (FIGS. 20-21) to (2) a vertical position (FIG. 22) when the hand truck **400** is in a horizontal position (e.g., a cart orientation). In the embodiment shown in FIG. 21, the upper handle assembly **470** comprises: (1) a first side handle rail **476**; (2) a second side handle rail **474**; and (3) a U-shaped connector **412**.

The first side handle rail **476** may be made of a substantially straight, elongated tube. In the embodiment shown in FIG. 21, the first side handle rail **476** has a substantially circular (e.g., circular) profile. In alternative embodiments, the first side handle rail **476** may comprise a substantially linear (e.g., linear) tube with any other suitable profile (e.g., a square, rectangular, or oval profile). As shown in FIG. 21, the first side handle rail **476** may be adapted to fit and slide within the frame's first side rail **414**. In various embodiments, the dimensions of the inner surface of the first side rail **414** correspond to the dimensions of the outer surface of the first side handle rail **476** such that the first side handle rail **476** can nest within the first side rail **414** with sufficient clearance to facilitate smooth sliding and sufficient snugness to provide rigidity of the hand truck **400** when the upper handle assembly **470** is in an expanded configuration.

The second side handle rail **474** may be made of a substantially straight, elongated tube. In the embodiment shown in FIG. 21, the second side handle rail **474** has a substantially circular (e.g., circular) profile. In alternative embodiments, the second side handle rail **474** may comprise a substantially linear (e.g., linear) tube with any other suitable profile (e.g., a square, rectangular, or oval profile). As shown in FIG. 21, the second side handle rail **474** may be adapted to fit and slide within the frame's second side rail **416**. In various embodiments, the dimensions of the inner surface of the second side rail **416** correspond to the dimensions of the outer surface of the second side handle rail **474** such that the second side handle rail **474** can nest within the second side rail **416** with sufficient clearance to facilitate smooth sliding and sufficient snugness to provide rigidity of the hand truck **400** when the upper handle assembly **470** is in an expanded configuration.

In a particular embodiment, the U-shaped connector **412** is adapted to connect the top portions of the first side handle rail **476** and the second side handle rail **474**. The U-shaped connector **412** may be adapted for use as a handle.

### Nose Plate

In the embodiment shown in FIG. 20, the hand truck **400** has a nose plate **420** that is substantially structurally similar (e.g., identical) to the nose plate **220** of the embodiment of the hand truck **200** shown in FIG. 7.

### Primary Wheel Assembly

In the embodiment shown in FIG. 20, the hand truck **400** has a primary wheel assembly **440** that is substantially structurally similar to (e.g., identical to) the primary wheel assembly **240** of the embodiment of a hand truck **200** shown in FIG. 7.

### Secondary Wheel Assembly

In particular embodiments, the fourth exemplary hand truck **400** may further comprise a secondary wheel assembly **490.** In the embodiment shown in FIG. 22, the secondary wheel assembly **490** is adapted for facilitating the movement of the hand truck **400** relative to a support surface while the hand truck **400** is in a horizontal orientation (e.g., the hand truck is being used as a cart). The secondary wheel assembly **490** may be adapted for cooperating with the primary wheel assembly **440** to facilitate rolling movement of the hand truck **400.** In various embodiments, the secondary wheel assembly **490** comprises at least one wheel **493**, **494** rotatably attached adjacent (e.g., to) the upper end of the frame **410** when the hand truck **400** is in a substantially vertical orientation. In the embodiment shown in FIG. 21, the secondary wheel assembly **490** comprises a first **491** and a second **492** caster, first and second wheels **493**, **494** wheels that are each respectively rotatably mounted to one of the casters **491**, **492**, and a secondary wheel mount **480**.

In particular embodiments, the secondary wheel mount **480** is positioned adjacent (e.g., to) the respective upper ends of the first **414** and second **416** side frame rails and may operate as a connecting member. In the embodiment shown in FIG. 21, the secondary wheel mount **480** extends between the respective upper ends of the first **414** and second **416** side frame rails. In this embodiment, the secondary wheel mount **480** extends substantially perpendicularly (e.g., perpendicularly) between the first **414** and second **416** side frame rails toward the rear of the hand cart **400** when the hand cart **400** is in a substantially vertical position.

### Nesting Multiple Fourth Exemplary Hand Trucks

In various embodiments, the body **401** of the fourth exemplary hand truck **400** is adapted to nest with hand truck bodies having a structure that is the same or substantially similar to the structure of the fourth exemplary hand truck body **401** (e.g., with "like" hand truck bodies). As may be understood from FIGS. 23-25, the hand truck body **401** is adapted to nest with like hand truck bodies in substantially the same manner that the hand truck body **201** of FIG. 7 is adapted to nest with like hand truck bodies.

FIGS. 22-25 show three like hand truck bodies **401, 401A-401B** in a nested, mating relationship. In this embodiment, the hand truck bodies **401, 401A-401B** are dimensioned so that, when the hand truck bodies **401, 401A-401B** are positioned in a nested, mating relationship, the exterior face of the secondary wheel mount **480** of the front hand truck (e.g., hand truck body **401**) at least substantially mates with (e.g., entirely mates with), the interior face of the of the secondary wheel mount **480A** of the rear hand truck body (e.g., hand truck body **401A**).

### Fifth Exemplary Hand Truck

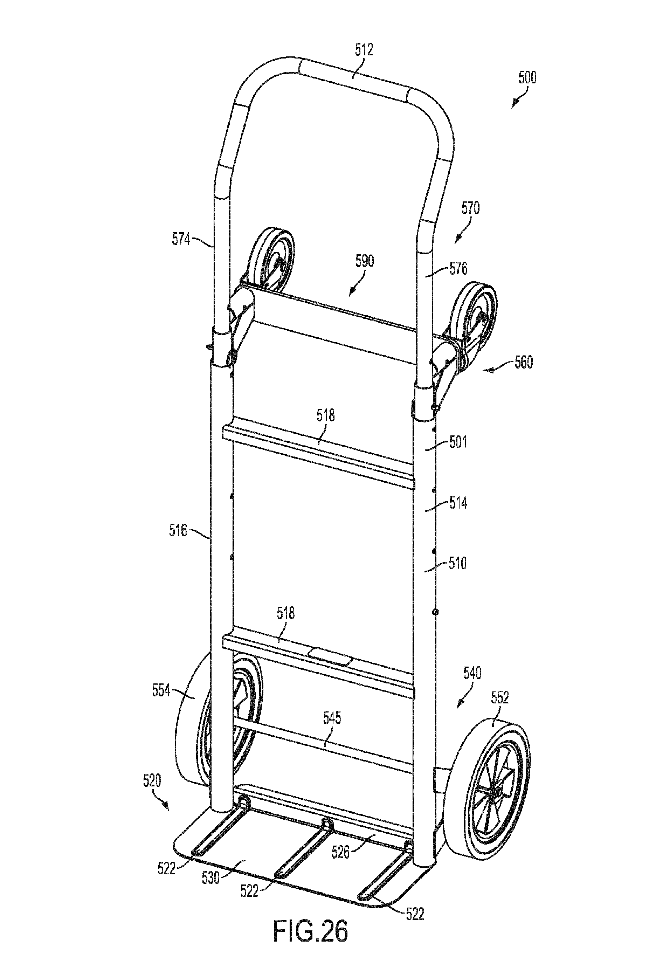

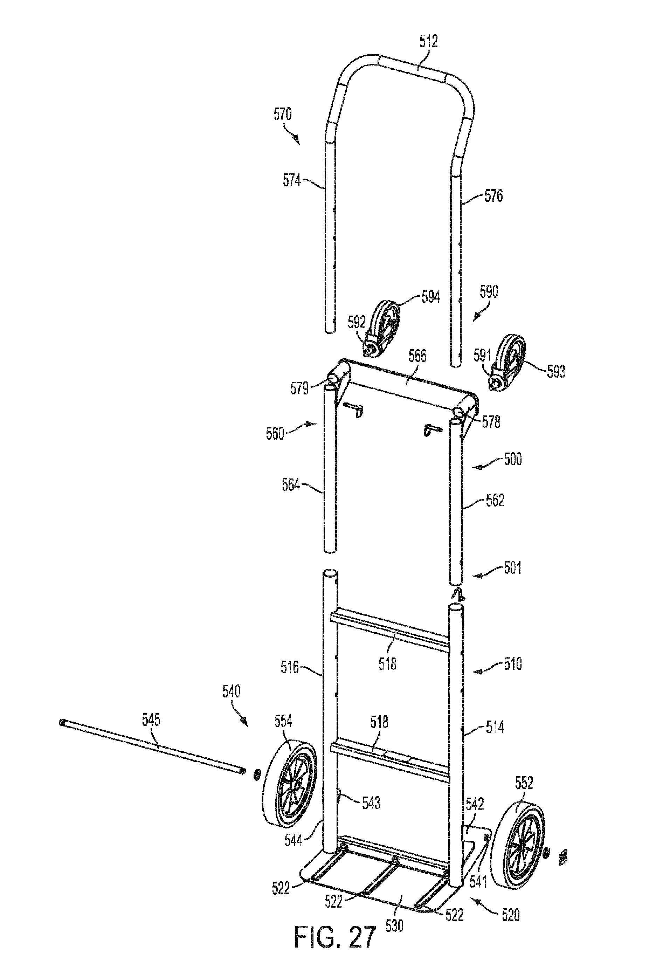

A fifth exemplary hand truck **500** is shown in FIGS. 26-28. As may be understood from these figures, the body **501** of this hand truck is, generally speaking, an expandable, convertible version of the hand truck body **101** shown in FIG. 1. The fifth exemplary hand truck **500** is adapted for conversion between: (1) a vertical hand truck orientation and (2) a horizontal hand cart orientation. As shown in FIG. 27, in this embodiment, the hand truck **500** comprises: (1) a primary frame **510**; (2) a secondary frame **560**; (3) an upper handle assembly **570**; (4) a nose plate **520**; (5) a primary wheel assembly **540** (which is shown in FIG. 27 with the wheel assembly's axle **545** and wheels **552, 554** removed for purposes of clarity); and (6) a secondary wheel assembly **590.** These various components are discussed in greater detail below.

### Primary Frame

The hand truck **500** may include any suitable type of primary frame **510**. In the embodiment shown in FIG. 26, this primary frame **510** includes: (1) a first side frame rail **514** (which, in this embodiment, is a substantially straight, elongated frame member that is adapted to stand in a substantially vertical orientation when the hand truck **500** is in an upright position); (2) a second side frame rail **516** (which, in this embodiment, is a substantially straight, elongated frame member that is adapted to stand in a substantially vertical orientation when the hand truck **500** is in an upright position); and (3) a plurality of crossbars **518** that extend between, and physically connect, the first and second side frame rails **514**, **516**.

The various components of the primary frame **510** may be made of any suitable (preferably sturdy) material (e.g., a suitable metal such as aluminum or steel, or plastic). These components are secured together using any suitable combination of fasteners or welding techniques to provide a rigid frame for the hand truck **500**.

### Secondary Frame

The hand truck **500** may include any suitable type of secondary frame **560**. The secondary frame **560** is adapted for facilitating the selective conversion of the hand truck **500** between; (1) a compact configuration and (2) an expanded configuration. In the embodiment shown in FIG. 27, this secondary frame **560** includes: (1) a first side rail **562**; (2) a second side rail **564**; and (3) a connecting member **566**.

The first side rail **562** may be made of a substantially straight, elongated tube. In the embodiment shown in FIG. 27, the first side rail **562** has a substantially circular (e.g., circular) profile. In alternative embodiments, the first side rail **562** may comprise a substantially linear (e.g., linear) tube with any other suitable profile (e.g., a square, rectangular, or oval profile). As shown in FIG. 27, the first side rail **562** may be adapted to fit within the primary frame's **510** first side frame rail **514**. As shown in FIG. 27, the first side rail **562** has a cross sectional profile that corresponds to the cross sectional profile of the first side frame rail **514**. In various embodiments, the dimensions of the inner surface of the first side frame rail **514** correspond to the dimensions of the outer surface of the first side rail **562** such that the first side rail **562** can nest within the first side frame rail **514** with sufficient clearance to facilitate smooth sliding and sufficient snugness to provide rigidity of the hand truck **500** when in an expanded configuration.

The second side rail **564** may be made of a substantially straight, elongated tube. In the embodiment shown in FIG. 27, the second side rail **564** has a substantially circular (e.g., circular) profile. In alternative embodiments, the second side rail **564** may comprise a substantially linear (e.g., linear) tube with any other suitable profile (e.g., a square, rectangular, or oval profile). As shown in FIG. 27, the second side rail **564** may be adapted to fit and slide within the primary frame's **510** second side frame rail **516**. As shown in FIG. 27, the second side rail **564** has a cross sectional profile that corresponds to the cross sectional profile of the second side frame rail **516**. In various embodiments, the dimensions of the inner surface of the second side frame rail **516** correspond to the dimensions of the outer surface of the second side rail **564** such that the second side rail **564** can nest within the second side frame rail **516** with sufficient clearance to facilitate smooth sliding and sufficient snugness to provide rigidity of the hand truck **500** when in an expanded configuration.

In particular embodiments, the connecting member **566** is adapted to connect the top portions of the first side rail **562** and the second side rail **564**. The connecting member **566** may be made of any suitable (preferably sturdy) material (e.g., a suitable metal such as steel or aluminum, or plastic). The connecting member **566** is adapted to substantially mate with (e.g., entirely mate with) a like connecting member **566** of a like hand truck body **501**.

### Upper Handle Assembly

The hand truck **500** may include an upper handle assembly **570**. As may be understood from FIG. 27, the upper handle assembly **570** is adapted to be selectively moved from: (1) a vertical position when the hand truck **500** is in a substantially vertical position to (2) a vertical position when the hand truck **500** is in a horizontal position (e.g., a cart orientation). In the embodiment shown in FIG. 27, the upper handle assembly **570** comprises: (1) a first side handle rail **576**; (2) a second side handle rail **574**; (3) an upper connecting member **512**; and (4) first **578** and second **579** handle supports.

The first side handle rail **576** may be made of a substantially straight, elongated tube. In the embodiment shown in FIG. 27, the first side handle rail **576** has a substantially circular (e.g., circular) profile. In alternative embodiments, the first side handle rail may comprise a substantially linear (e.g., linear) tube with any other suitable profile (e.g., a square, rectangular, or oval profile). As shown in FIG. 27, the first side handle rail **576** may be adapted to fit and slide within the first side rail **562**. As shown in FIG. 27, the first side handle rail **576** has a cross sectional profile that corresponds to the cross sectional profile of the first side rail **562**. In various embodiments, the dimensions of the inner surface of the first side rail **562** correspond to the dimensions of the outer surface of the first side handle rail **576** such that the first side handle rail **576** can nest within the first side rail **562** with sufficient clearance to facilitate smooth sliding and sufficient snugness to provide rigidity of the hand truck **500** when the hand truck **500** is in an expanded configuration.

The second side handle rail **574** may be made of a substantially straight, elongated tube. In the embodiment shown in FIG. 27, the second side handle rail **574** has a substantially circular (e.g., circular) profile. In alternative embodiments, the second side handle rail **574** may comprise a substantially linear (e.g., linear) tube with any other suitable profile (e.g., a square, rectangular, or oval profile). As shown in FIG. 27, the second side handle rail **574** may be adapted to fit and slide within the second side rail **564**. As shown in FIG. 27, the second side handle rail **574** has a cross sectional profile that corresponds to the cross sectional profile of the second side rail **564**. In various embodiments, the dimensions of the inner surface of the second side rail **564** correspond to the dimensions of the outer surface of the second side handle rail **574** such that the second side handle rail **574** can nest within the second side rail **564** with sufficient clearance to facilitate smooth sliding and sufficient snugness to provide rigidity of the hand truck **500** when the hand truck **500** is in an expanded configuration.

The secondary frame assembly **560** may further comprise a first **578** and a second **579** handle support. The first **578** and second **579** handle supports are adapted to receive the respective ends of the first **576** and second **574** side handle rails when the hand truck **500** is in the horizontal, cart orientation. As shown in FIG. 27, the second handle support **579** has a cross sectional profile that corresponds to the cross sectional profile of the second side handle rail **574**. Similarly, the first handle support **578** has a cross-sectional profile that corresponds to the cross sectional profile of the first side handle rail **576**. The first **578** and second **579** handle supports are adapted to support the upper handle assembly **570** when the hand truck **500** is in the horizontal cart orientation.

In a particular embodiment, the upper connecting member **512** is adapted to connect the top portions of the first side handle rail **576** and the second side handle rail **574**. The upper connecting member **512** may be adapted for use as a handle.

### Nose Plate

In the embodiment shown in FIG. 26, the hand truck **500** has a nose plate **520** that is structurally similar (e.g., identical) to the nose plate **120** of the first embodiment of the hand truck **100** shown in FIG. 1.

### Primary Wheel Assembly

In the embodiment shown in FIG. 26, the hand truck **500** has a primary wheel assembly **540** that is structurally similar (e.g., identical) to the wheel assembly **140** of the first embodiment of the hand truck **100** shown in FIG. 1.

### Secondary Wheel Assembly

In particular embodiments, the fifth exemplary hand truck **500** may further comprise a secondary wheel assembly **590**. In the embodiment shown in FIG. 27, the secondary wheel assembly **590** is adapted for facilitating the movement of the hand truck **500** relative to the support surface while the hand truck **500** is in a horizontal orientation (e.g., when the hand truck **500** is being used as a cart). The secondary wheel assembly **590** may be adapted for cooperating with the primary wheel assembly **540** to facilitate rolling movement of the hand truck **500**. In various embodiments, the secondary wheel assembly **590** comprises at least one wheel that is rotatably attached adjacent the upper end of the hand truck **500** when the hand truck **500** is in a substantially vertical position. In various embodiments, the secondary wheel assembly **590** is attached to the underside of the connecting member **566** when the hand truck **500** is in the horizontal orientation. In the embodiment shown in FIG. 27, the secondary wheel assembly **590** comprises first and second casters **591**, **592**, and first and second wheels **593**, **594** that are each rotatably attached to one of the respective casters **591**, **592**.

### Conversing Fifth Exemplary Hand Truck

In various embodiments, the hand truck **500** is adapted for selective conversion between: (1) a vertical operating arrangement and (2) a horizontal operating arrangement. In various embodiments, while in the horizontal position, the hand truck **500** is further adapted for selective conversion between: (1) a compact operating arrangement and (2) an expanded operating arrangement. In alternative embodiments, the hand truck **500** is further adapted for selective conversion between: (1) a compact operating arrangement and (2) an expanded operating arrangement while in the vertical position.

As may be understood from FIG. 27, to convert the hand truck **500** from the vertical operating arrangement to the horizontal operating arrangement, a user may lay the hand truck **500** on the ground so that the primary wheel assembly **540** and secondary wheel assembly **590** are both in contact with a support surface supporting the hand truck **500**. Once the hand truck **500** is in the horizontal operating arrangement, the user may remove the upper handle assembly **570** from the secondary frame assembly **560** and insert the first side handle rail **576** into the first handle support **578** and the second side handle rail **574** into the second handle support **579**. The user may then selectively reposition the secondary frame assembly **560** relative to the primary frame assembly **510**. Sliding the secondary frame **560** relative to the hand truck's base portion allows the user to selectively adjust the hand truck **500** between, for example, a compact operating arrangement and an extended operating arrangement. The secondary frame **560** may be locked in the extended operating arrangement with any suitable locking mechanism (e.g., a pin).

In additional embodiments, the secondary frame **560** may be arranged into its extended arrangement while the hand truck **500** is in its vertical operating arrangement.

### Nesting Multiple Fifth Exemplary Hand TruckBodies

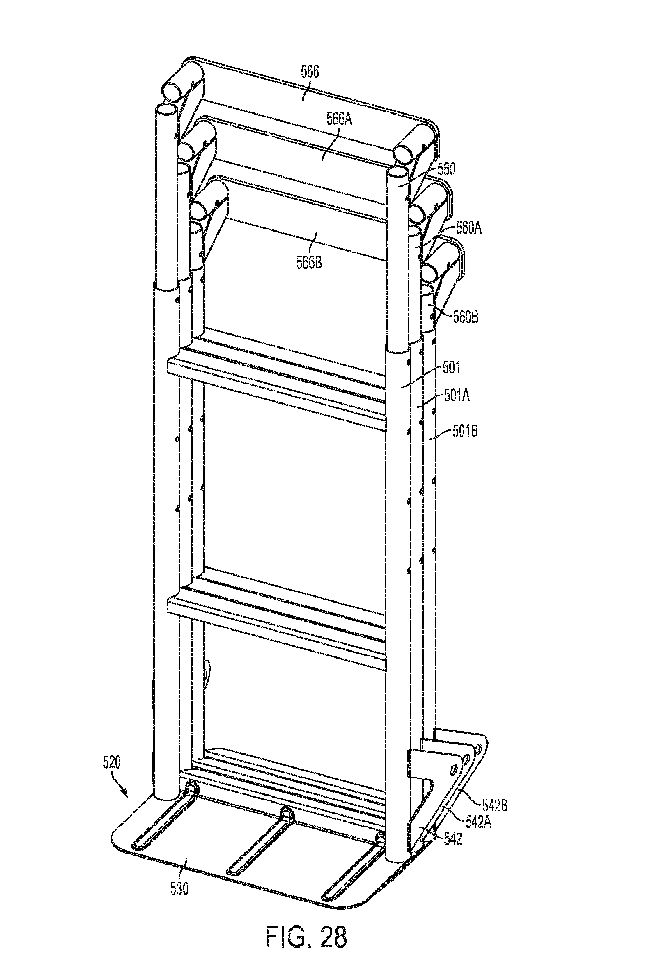

In various embodiments, the body **501** of the fifth exemplary hand **500** truck is adapted to nest with hand truck bodies having a structure that is the same or substantially similar to the structure of the fifth exemplary hand truck body **501** (e.g., with "like hand truck bodies). As may be understood from FIG. 28, the hand truck body **501** is adapted to nest its lower portion with the lower portion of like hand truck bodies in substantially the same manner that the hand truck body **101** of FIG. 1 is adapted to nest its lower portion with the lower portion of like hand truck bodies.

FIG. 28 shows three like hand truck bodies **501, 501A-501B** in a nested, mating relationship. As shown in this figure, in this embodiment, the hand truck bodies **501, 501A-501B** are dimensioned so that, when the hand truck bodies **501, 501A-501B** are positioned in a nested, mating relationship, the secondary frame **560** of the front hand truck body **501** at least substantially mates with (e.g., entirely mates with) the secondary frame **560A** of the rear hand truck body **501A** when the secondary frame **560** of the front hand truck body **510** is extended so that the bottom of the connecting member **566** is at least positioned above the connecting member **566A** of the rear hand truck body **501A** to allow the front hand truck body **501** and the rear hand truck body **501A** to stand nested in a substantially vertical position. In various embodiments, the bottom of the connecting member **566** of the front hand truck body **501** is extended to substantially the same height as the top of the connecting member **566A** of the rear hand truck body **501A.**

As shown in FIG. 28, when the fifth exemplary hand truck bodies **501, 501A-B** are in a nested, mating relationship, the secondary frames **560, 560A-B** are in a stair-stepped relationship with one another. In this stair-stepped relationship: (1) the connecting members **566, 566A** are substantially parallel to (e.g., parallel to) one another; and (2) the secondary frames **560** of hand truck bodies **501, 501A-B** are locked in positions of progressively increasing lengths.

As may be understood from FIG. 28, the rear-most hand truck body **501B** in the nested, mating relationship has a secondary frame **560B** that is in the least extended position of the various nested hand truck bodies **501**, **501A.** The hand truck body **501A** immediately in front of the rear-most hand truck body **501B** has a secondary frame **560A** that is locked at a length of extension sufficiently longer than the length of extension of the rear hand truck body **501B** to allow the secondary frame **560A** of the hand truck body **501A** immediately in front of the rear most hand truck body **501B** to nest in a stair-step relationship with the secondary frame **560B** of the rearmost hand truck body **501B** when both hand truck bodies **501A, 501B** are in a substantially vertical orientation.

As may be understood from FIG. 28, the secondary frame **560, 560A-B** of each successively nested hand truck body **501, 501A-B** is locked in an increasingly extended position. The three nested hand truck bodies **501, 501A-B** are all in a substantially vertical orientation. In the nested, mating relationship shown in FIG. 28, the first hand truck body **501B** has a secondary frame **560B** that is in an unextended position. The second, middle hand truck body **501A** has a secondary frame **560** that is extended to a first distance where the secondary frame **560A** of the second hand truck body **501A** is in a nested, stair-step relationship with the secondary frame **560B** of the first hand truck body **501B.** In the nested, mating relationship shown in FIG. 28, a third hand truck body **501** is the front hand truck body **501** of three like hand truck bodies **501, 501A-B** that are positioned in a nested, mating relationship. The secondary frame **560** of the third hand tuck body **501** is extended to a second distance where the secondary frame **560** of the third hand truck body **501** is in a nested, stair-step relationship with the secondary frame **560A** of the second hand truck body **501A.**

### Sixth Exemplary Hand Truck

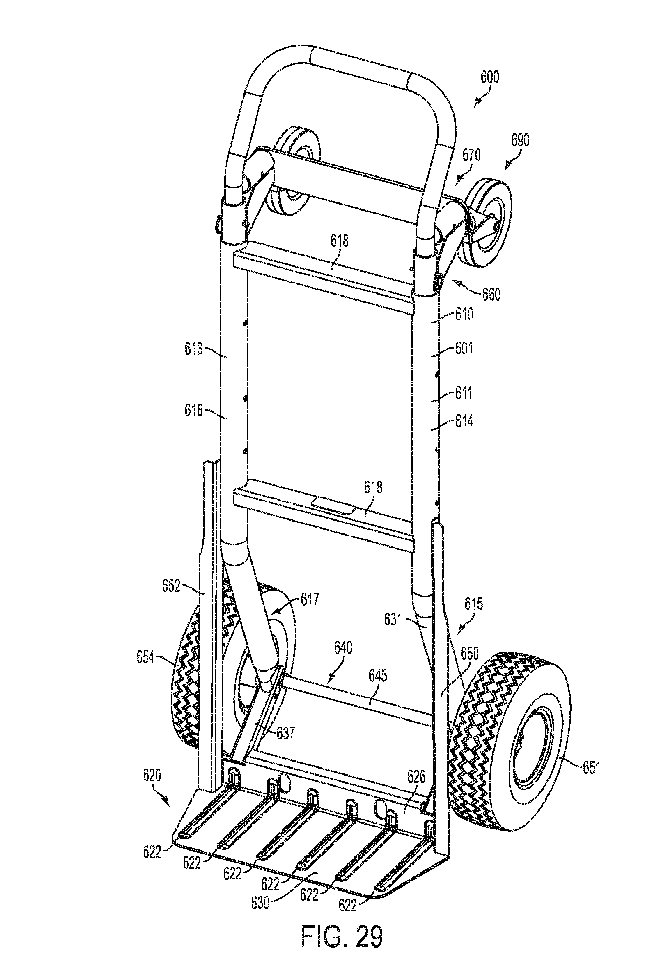

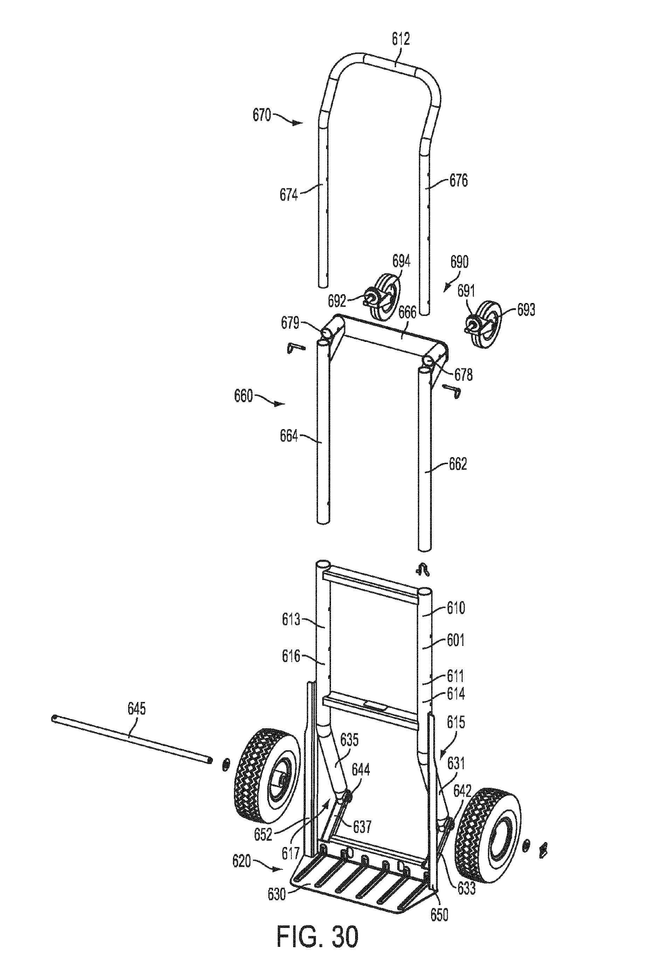

An exemplary hand truck according to a further embodiment is shown in FIGS. 29-31. In this embodiment, the hand truck **600** comprises: (1) a primary frame **610**; (2) a secondary frame **660**; (3) an upper handle assembly **670**; (4) a nose plate **620**; (5) a primary wheel assembly **640**; and (6) a secondary wheel assembly **690**. These various components are discussed in greater detail below.

### Primary Frame

The hand truck **600** has a primary frame **610** that is structurally similar (e.g., identical) to the frame **210** of the embodiment of a hand truck **200** shown in FIG. 7 without the handle **260** or upper connecting portion **212**.

### Secondary Frame

The hand truck **600** has a secondary frame **660** that is substantially structurally similar (e.g., identical) to the secondary frame **560** of the embodiment of a hand truck **500** shown in FIG. 27.

### Upper Handle Assembly

The hand truck **600** has an upper handle assembly **670** that is substantially structurally similar (e.g., identical) to the upper handle assembly **570** of the embodiment of a hand truck **500** shown in FIG. 27.

### Nose Plate

The hand truck **600** has a nose plate **620** that is substantially structurally similar (e.g., identical) to the nose plate **220** of the embodiment of a hand truck **200** shown in FIG. 7.

### Primary Wheel Assembly

The hand truck **600** has a primary wheel assembly **640** that is substantially structurally similar (e.g., identical) to the wheel assembly **240** of the embodiment of a hand truck **200** shown in FIG. 7.

### Secondary Wheel Assembly

The hand truck **600** has a secondary wheel assembly **690** that is substantially structurally similar (e.g., identical) to the secondary wheel assembly **590** of the embodiment of a hand truck **500** shown in FIG. 27.

### Conversing Sixth Exemplary Hand Truck

In various embodiments, the hand truck **600** is adapted to be selectively converted between a vertical and a horizontal orientation, and also selectively extended and retracted in the manner described above in regard to the hand truck **500** shown in FIG. 27.

### Nesting Multiple Sixth Exemplary Hand TruckBodies

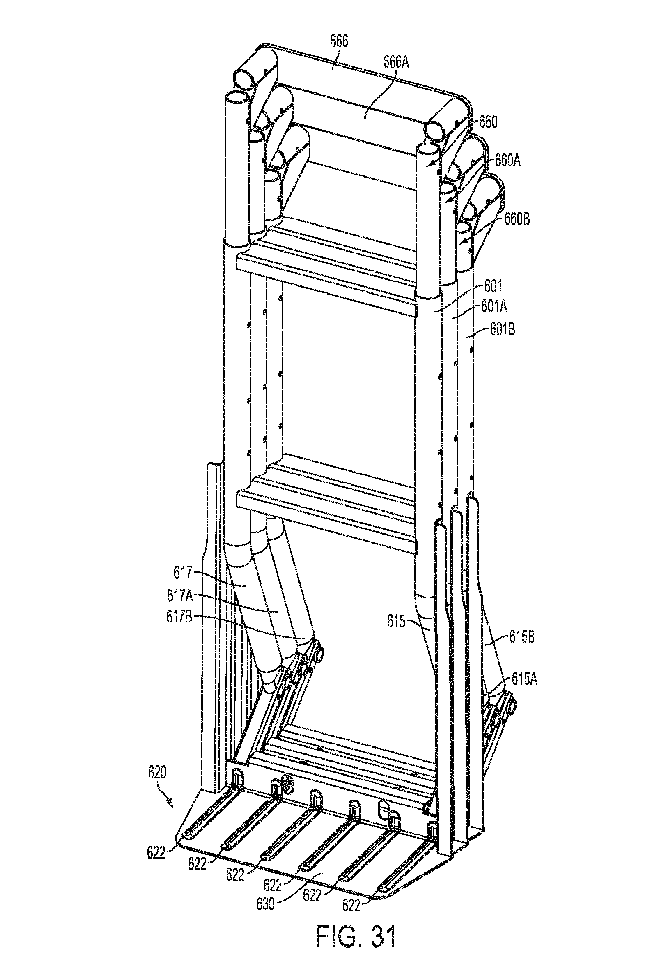

FIG. 31 shows three like hand truck bodies **601**, **601A-601B** in a nested, mating relationship. As may be understood from this figure, in this embodiment, the lower portion of the hand truck body **601** is adapted to nest with the lower portion of like hand truck bodies in substantially the same manner that the lower portion of the hand truck body **201** of FIG. 7 is adapted to nest with the lower portion of like hand truck bodies.

Similarly, as shown in FIG. 31, the hand truck bodies **601**, **601A-601B** are dimensioned so that, when the hand truck bodies **601**, **601A-601B** are positioned in a nested, mating relationship, the secondary frame **660** of the front hand truck body **601** at least substantially mates with (e.g., entirely mates with) the secondary frame **660A** of the rear hand truck body **601A** in substantially the same manner that the secondary frame **560** of the hand truck body **501** in FIGS. 26-28 mates with a like secondary frame **560A** of a like hand truck body **501A**.

### Exemplary Hand Truck Shipping Description

As shown in various figures referenced above, when a plurality of hand truck bodies are positioned in a nesting relationship, the hand truck bodies can fit in a compact space. This may, for example, facilitate shipping a large number of the hand truck bodies in a single shipping container.

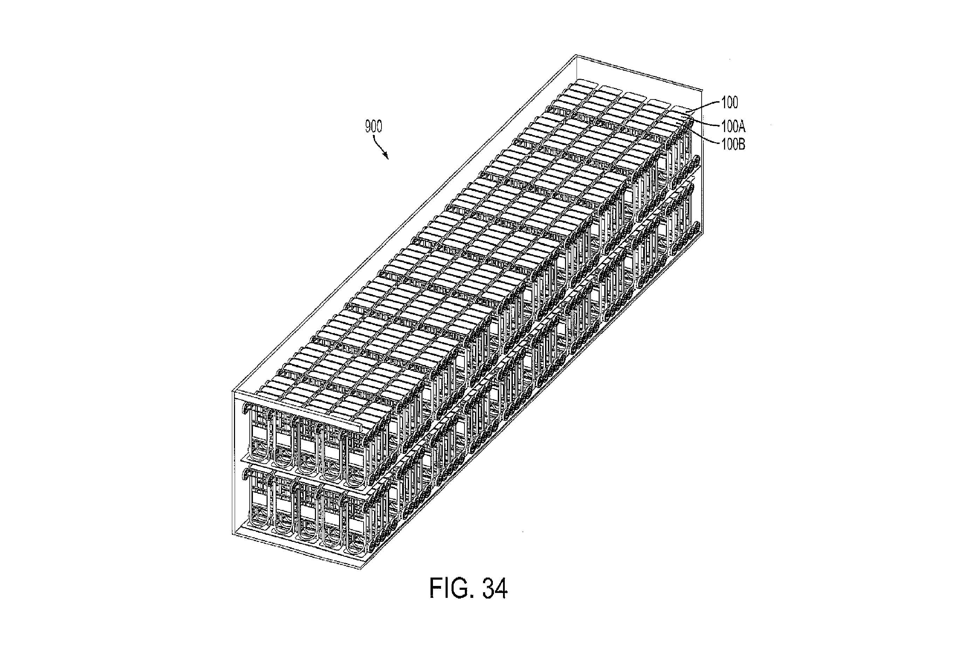

FIGS. 34-36 show various hand trucks loaded into a shipping container **900.** As may be understood form FIG. 34, a plurality of nested hand trucks **101**, **101A** can be fit compactly within a shipping container **900**. Because hand trucks are in a nested relationship, they may fit in a compact space, allowing efficient shipment of the hand trucks by: (1) placing a plurality of hand truck bodies in a nested relationship; (2) placing the plurality of nested hand truck bodies in a shipping container (such as a freight container or any other suitable container); (3) placing the hand trucks' respective wheels, axles, and handles (if applicable) in the shipping container; (4) transporting the shipping container, which contains the plurality of nested hand truck bodies and their respective wheels, axles, and handles (if applicable) from an origin to a destination; (5) unpacking the shipping container (e.g., at the destination or other suitable location); and (6) assembling the plurality of hand trucks (e.g., at the destination or other suitable location) by moving the hand truck bodies out of the nested relationship (e.g., one at a time) and assembling each respective hand truck body into a completed hand truck by attaching a respective axle and pair of wheels to each respective hand truck body and inserting the upper handle assembly into the secondary frame if applicable.

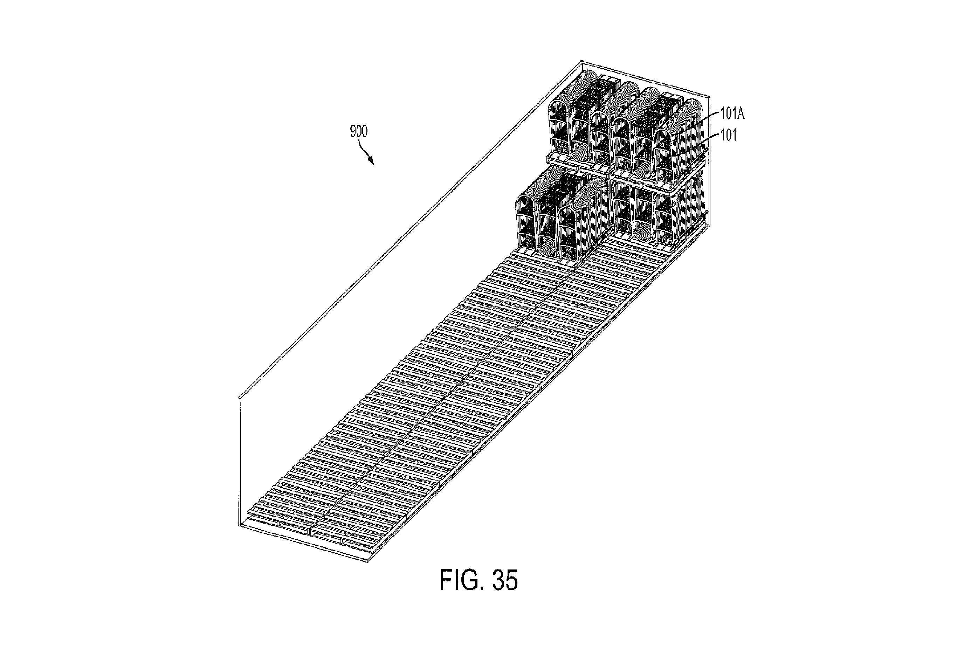

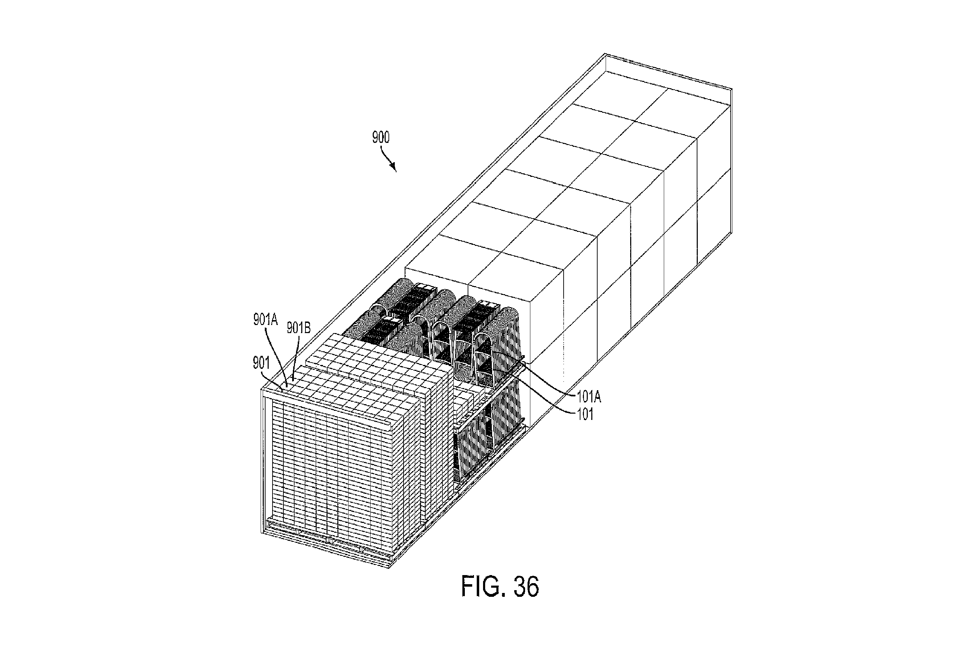

FIG. 34 shows a plurality of hand truck bodies **101, 101A-B** in a nested, mating relationship when the hand truck bodies **101, 101A-B** are placed in a shipping container **900**. FIG. 35 shows a shipping container **900** packed with the hand truck bodies **101**, **101A** in nested relationships along with accompanying wheel kits **901, 901A** containing wheels and axles. In the shipping container **900** shown in FIG. 35, over 3,000 hand trucks are packed in the container along with their accompanying wheel kits **901, 901A-B**. The shipping container **900** in FIG. 36 is packed with fully assembled hand trucks **100**, **100A-B**. As may be understood from FIG. 36, this shipping container **900** holds many fewer (approximately 1,000) hand trucks than the shipping container **900** of FIG. 35.

### Hand Truck with Wheel Assembly Adapted for Toolless Assembly

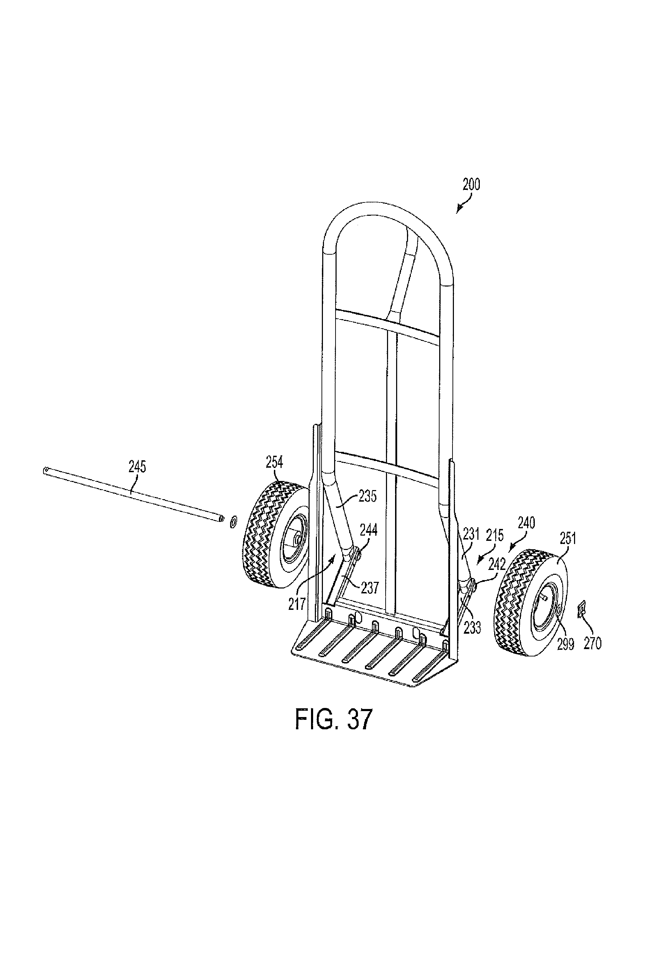

FIG. 37 shows a hand truck **200** according to a particular embodiment in an exploded view of the hand truck's wheel assembly **240**. In the embodiment shown in this figure, the wheel assembly **240** includes: (1) an axle **245**; (2) a clip **270**; (3) a pair of wheels **251, 254**; and (4) a first and second axle support **242, 244**. These various components are discussed in greater detail below.

### Axle

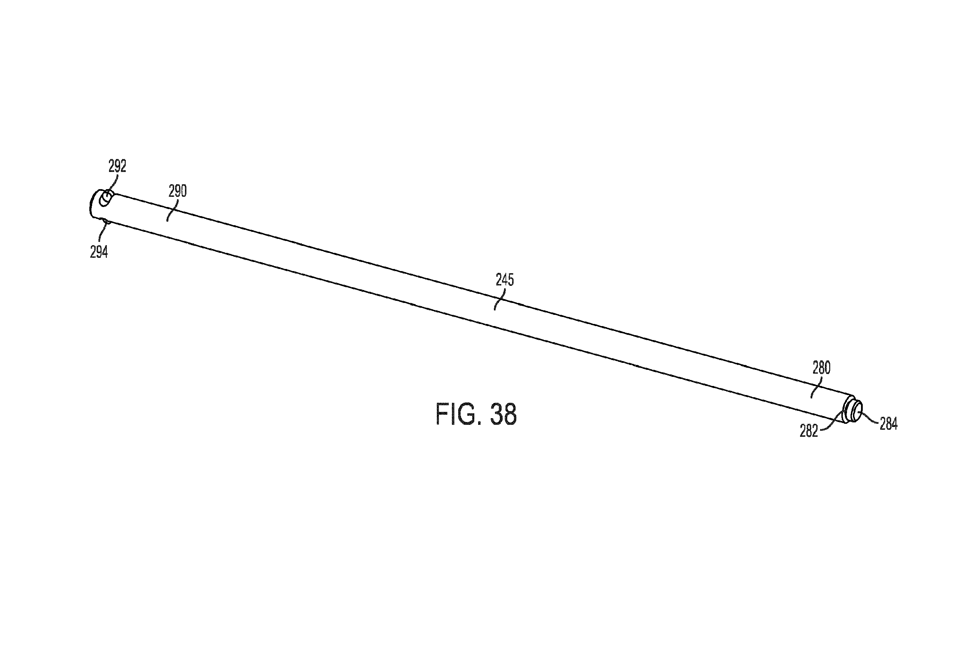

In the embodiment shown in Figure 38, the axle **245** comprises: (1) a first end **290** that comprises a first and a second projection **292, 294** that each extend outwardly from an outer surface of the axle **235**; and (2) a second end **280** that defines an axle recess **282** in the surface of the axle **245** and comprises an end piece **284** disposed adjacent the recess **282**.

### First End

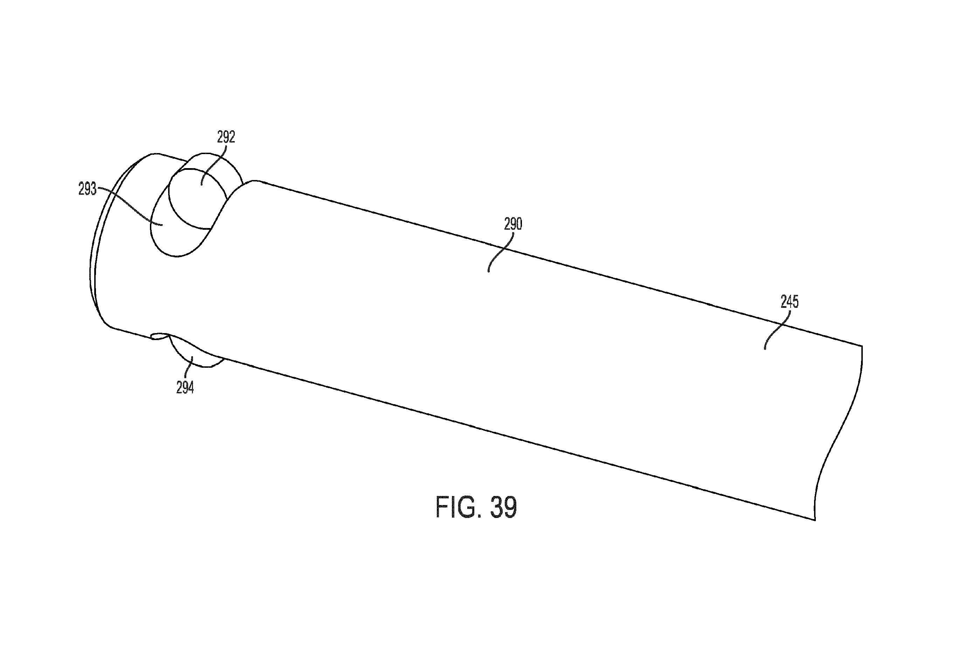

FIG. 39 shows a detail view of the axle's first end **290**. As shown in this figure, the first projection **292** comprises a substantially circular (e.g., circular) protrusion that is disposed at least partially within a first recess **293** defined adjacent the axle's first end **290**. As may be understood from this figure, the first recess **293** is substantially perpendicular (e.g., perpendicular) to the axle **245** and has a substantially semi-circular (e.g., semi-circular) profile that has a radius that corresponds to a radius of the first projection **292**. In certain embodiments, at least about half of the profile of the first projection **292** is disposed within the recess, and the remaining profile of the first projection **292** extends beyond the surface of the axle **245**.

In the embodiment shown in FIG. 39, the second projection **294** is substantially structurally similar (e.g., identical) to the first projection **292** and disposed on an opposing side of the hand truck's axle **245** from the first projection **292**. In particular embodiments, the first and second projections **292, 294** are substantially co-planer (e.g., co-planar) and disposed substantially parallel (e.g., parallel) to the hand truck's axle **245**.

### Second End

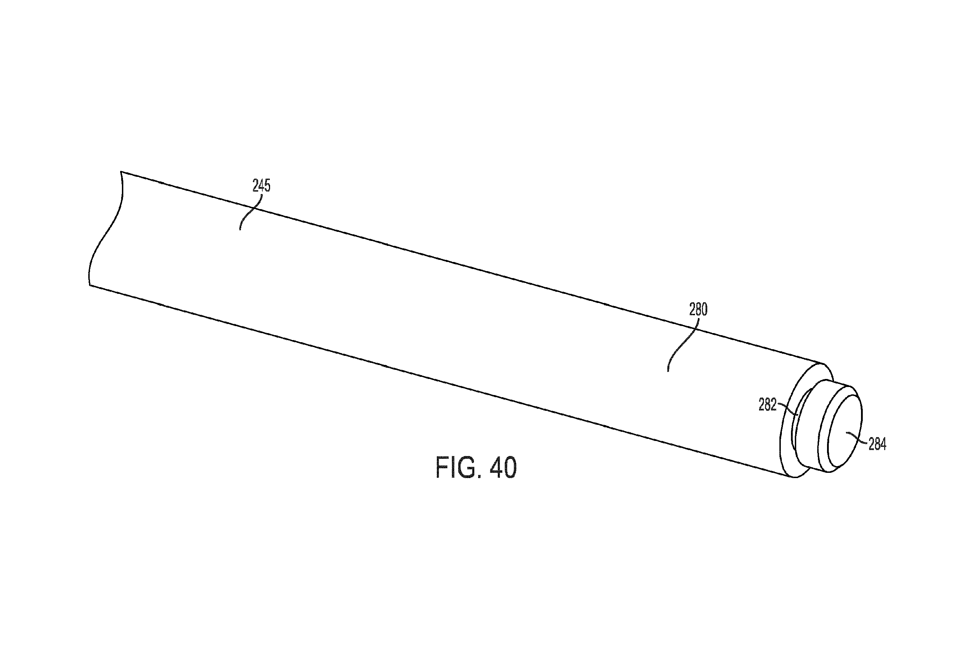

FIG. 40 shows a detail view of the axle's second end **280**. As may be understood from this figure, the axle **245** defines an axle recess **282** adjacent the axle's second end **280**. In particular embodiments, the portion of the axle **245** that defines the axle recess **282** has a radius that is less than the axle's radius. In various embodiment, the axle recess **282** extends around the axle's circumference substantially perpendicular (e.g., perpendicular) to the axle's central axis.

As shown in FIG. 40, in various embodiments, the axle's end piece **284** is a substantially cylindrical protrusion that extends adjacent the axle's second end **284**. In particular embodiments, the axle's end piece has a substantially circular (e.g., circular) cross section, has a radius that is less than the axle's radius, and defines a beveled edge along the circumference of the edge piece's outer surface.

### Clip

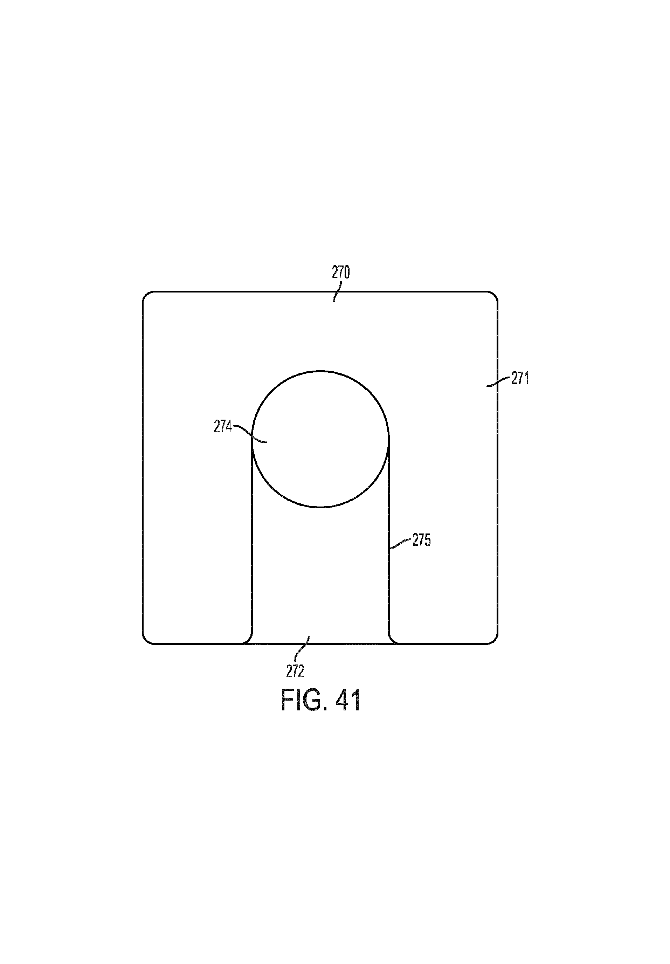

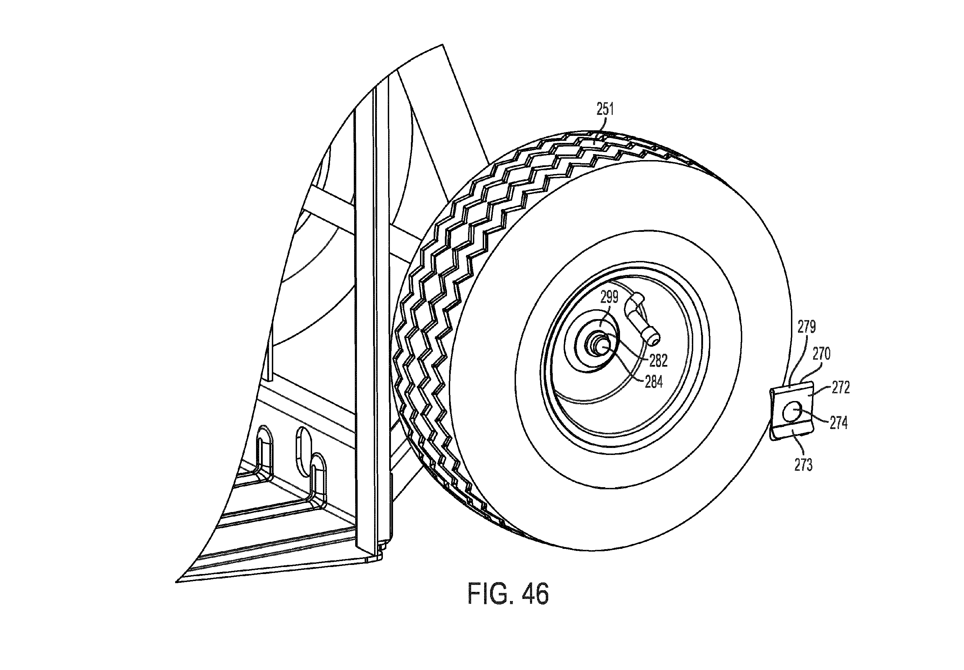

FIG. 41 shows a rear detail view of the wheel assembly's clip **270**, and FIG. 46 shows the clip **270** from a front perspective view. As shown in these figures, the clip **270** comprises: (1) a first clip portion **271** defining an elongated channel **275**; (2) a second clip portion **272** defining an opening **274** (e.g., a substantially circular opening); (3) and a biasing mechanism **279** for biasing the second clip portion **272** toward a particular home position.

### First Clip Portion

As shown in FIG. 41, the first clip portion **271** has a substantially rectangular (e.g., rectangular) profile. In particular embodiments, the first clip portion **271** may have a substantially square (e.g., square) profile and be substantially planar (e.g., planar). In certain embodiments, the thickness of the first clip portion **271** substantially corresponds to the width of the axle recess **282**.

In particular embodiments, the first clip portion **271** defines an elongated channel **275**, which has a substantially rectangular (e.g., rectangular) profile having a substantially semi-circular (e.g., semi-circular) arc along the upper side of the substantially rectangular (e.g., rectangular) profile. In the embodiment shown in FIG. 41, the semi-circular portion of the elongated channel **275** has a radius that at least generally corresponds to the radius of the portion of the axle **245** that defines the axle recess **282**.

### Second Clip Portion

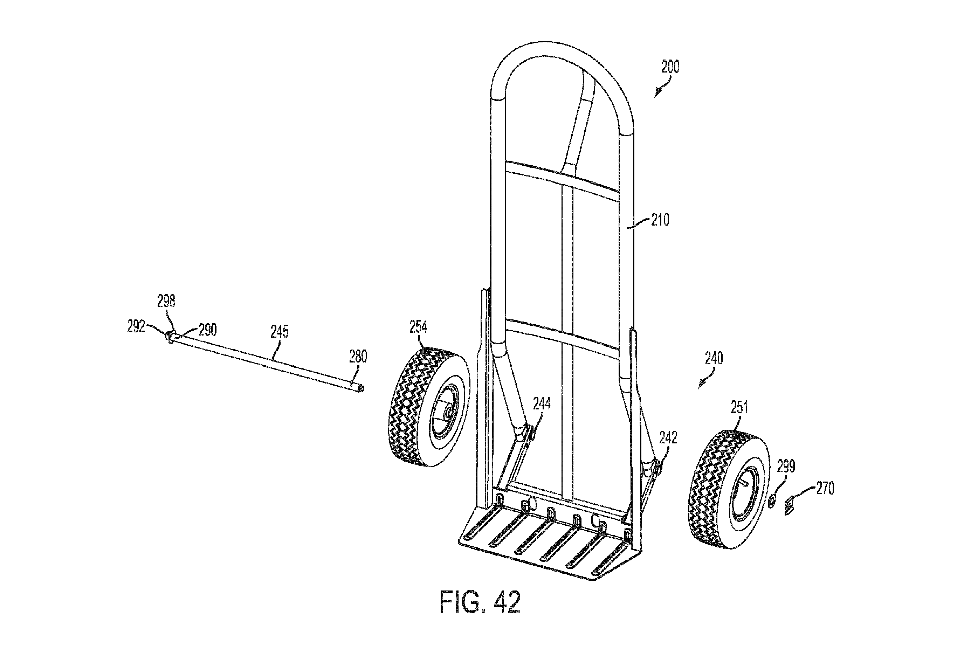

As shown in FIG. 46, the second clip portion **272** has a substantially rectangular (e.g., rectangular) profile. In particular embodiments, the second clip portion **272** may have a substantially square (e.g., square) profile and may be substantially planar (e.g., planar). In the embodiment shown in FIG. 46, the second clip portion **272** comprises an outwardly turned portion **273** disposed adjacent a lower end of the second clip portion **272.** In particular embodiments, the outwardly turned portion **273** forms an angle of between about 90 degrees and about 180 degrees with the remainder of the second clip portion **272**. In the embodiment shown in FIG. 42, the outwardly turned portion **273** forms an angle of about 150 degrees with the remainder of the second clip portion **272**.

In particular embodiments, the second clip portion's opening **274** is substantially circular (e.g., circular) and defined substantially centered (e.g., centered) on the second clip portion **272.** In particular embodiments, the second clip portion's opening is at least partially aligned (e.g., aligned) with at least a portion of the first clip portion's elongated channel **275**. In certain embodiments, the radius of the second clip portion's opening **274** corresponds generally to the radius of the axle's end piece **284.**

In particular embodiments, the first and second clip portions **271, 272** may be substantially parallel (e.g., parallel) and substantially co-facing (e.g., co-facing). In certain embodiments, the first and second clip portions **271, 272** may be portions of a substantially continuous (e.g., continuous) piece of material, which may include any suitable material (e.g., a suitable metal such as aluminum or steel, or plastics).

### Biasing Mechanism

In the embodiment shown in FIG. 46, the biasing mechanism **279** comprises a rolled connection between an upper edge of the first and second clip portions **271, 272.** In particular embodiments, the biasing mechanism may be adapted for biasing the second clip portion **272** toward a particular home position. The particular home position may be, for example, a position adjacent the first clip portion **271**. In particular embodiments, the biasing mechanism may include a torsion spring that may be disposed adjacent an upper edge of the first and second clip portions **271, 272**. In other embodiments, the biasing mechanism may include any other suitable mechanism for biasing the second clip portion **272** toward the particular home position (e.g., a linear spring).

### Pair of Wheels

As shown in Figure 37, the wheel assembly **240** includes any suitable first and second wheel **251**, **254**. In particular embodiments, the wheels **251, 254** may be adapted to at least partially support the hand truck **200** when attached to the hand truck **200** and may be adapted to facilitate the rolling movement of the hand truck **200** over a support surface.

### Axle Supports

In the embodiment shown in FIG. 37, the wheel assembly **240** also includes a first and second axle support **242, 244** that are substantially structurally similar (e.g., identical) to the first and second axle support **242, 244** of the embodiment of a hand truck **200** shown in FIG. 7.

### Exemplary Steps for Assembling a Wheel Assembly Substantially without the Use of Tools

Figures 42-48 show exemplary steps for assembling a hand truck's wheels **251, 254,** axle **245** and clip **270** in order to maintain the hand truck's wheels **251, 254** adjacent (e.g., to) a lower portion of the hand truck **200**. As may be understood from FIG. 42, in particular embodiments, the wheel assembly **240** may be adapted to allow a user to assemble the wheel assembly **240** substantially without the use of tools by first positioning the first wheel **251** adjacent the first axle support **242** and placing the second wheel **254** adjacent the second axle support **244**.

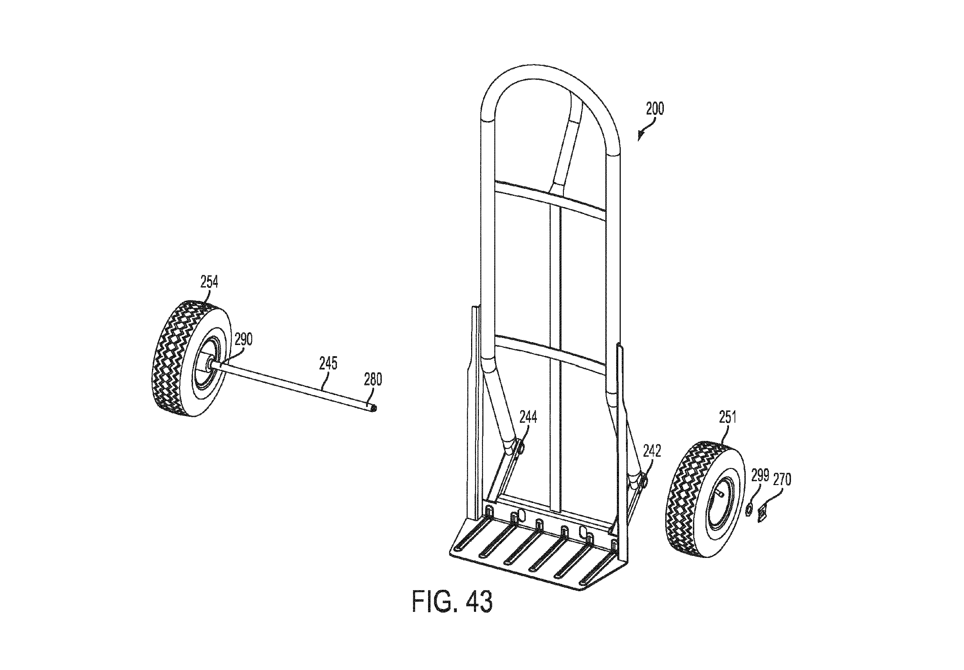

As shown in FIG. 42, in particular embodiments, the wheel assembly **240** may further comprise a first and second washer **298, 299**. In such embodiments, a user may slide the first washer **298** over the axle's second end **280** and along the length of the axle **245** until at least a portion of the first washer **298** engages at least a portion of the axle's first and second projections **292, 294**. A user may then, as shown in FIG. 43, slide the second wheel **254** over the axle's second end **280** along the length of the axle **245** until at least a part of the second wheel **254** engages at least a part of the first washer **298.** In embodiments of the hand truck **200** without washers **298, 299,** the user may slide the second wheel **254** along the length of the axle **245** until at least a part of the second wheel **254** engages at least a part of the first and second protrusions **292, 294.**

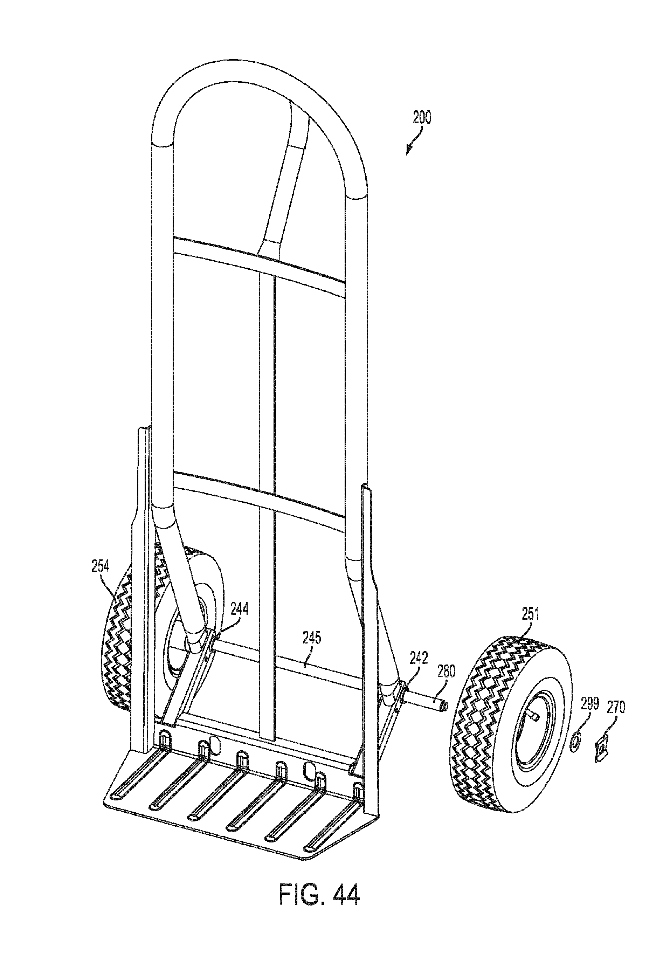

As may be understood from FIG. 44, a user may then insert the axle's second end **280** through the second and first axle supports **244, 242** such that the axle's second end **280** extends a distance beyond the first axle support **242**. A user may then place the first wheel **251** on the axle's second end **280.**

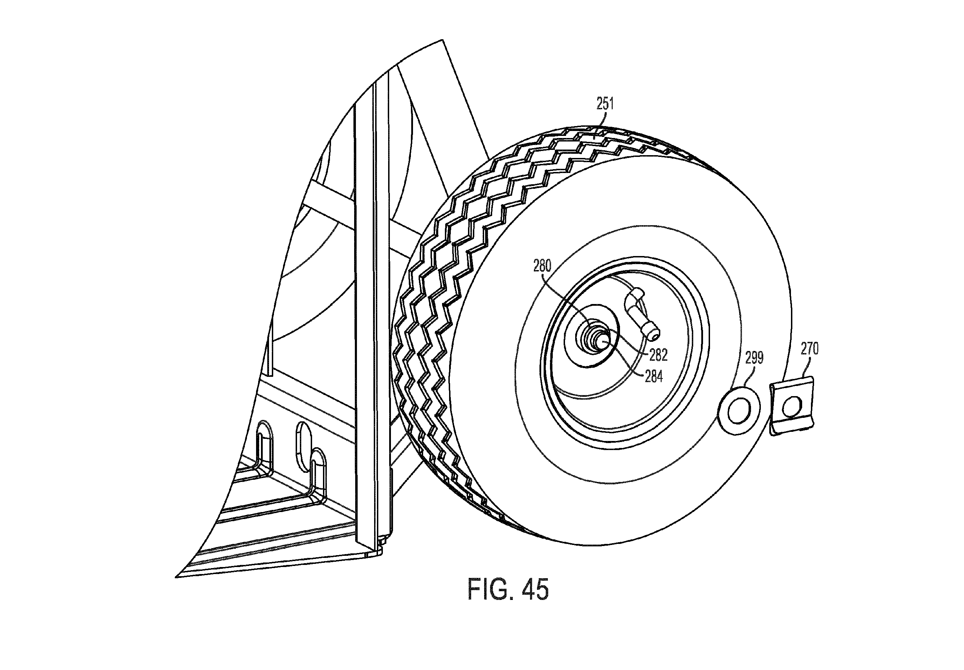

As may be understood from FIG. 45, when the first wheel **251** is disposed on the axle's second end **280**, the axle recess **282** and axle's end piece **284** extend beyond the outside edge of the first wheel **251**. FIG. 46 shows the second washer **299** disposed on the axle's second end **280** after a user has placed the second washer **299** on the axle's second end **280.**

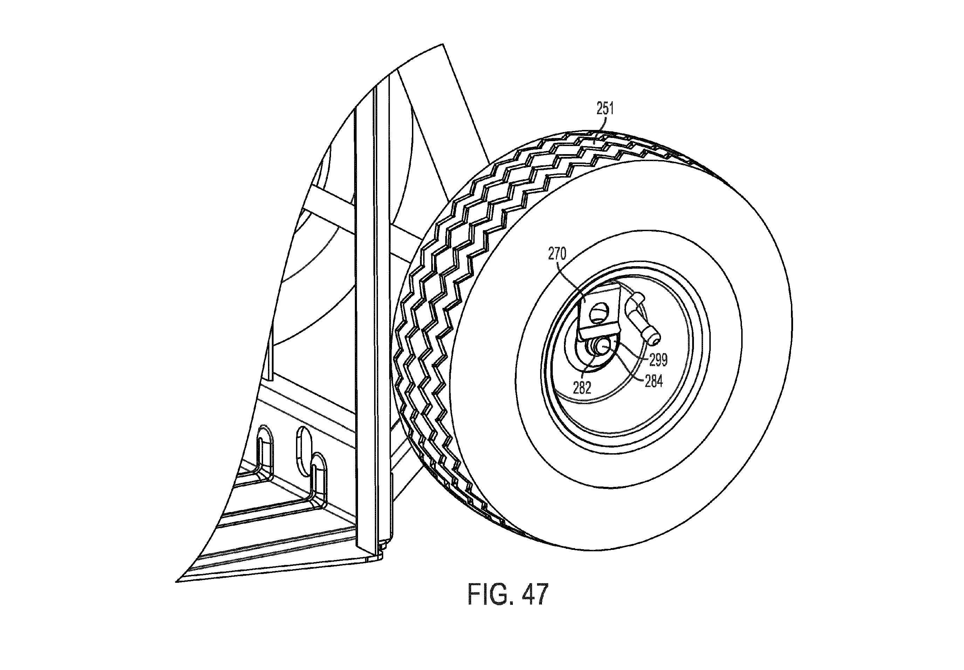

FIGS. 47-48 show the steps of attaching the clip **270** to maintain the first wheel **251** in a substantially fixed (e.g., fixed) lateral position adjacent the hand truck **200**. In particular embodiments, the clip **270** is adapted to attach adjacent the axle's second end **290** and maintain the first wheel **251** adjacent the axle's second end **290**. As may be understood from FIG. 47, a user mav align the first clip portion's elongated channel **275** with the axle recess **282**. As the user slides the clip **270** adjacent the axle's second end **280**, at least a portion of the first clip portion **271** that defines the elongated channel **275** engages at least a portion of the axle recess **282,** and the clip's outwardly turned portion **273** engages the axle's end piece **284,** which exerts an outward force on the outwardly turned portion **273**.

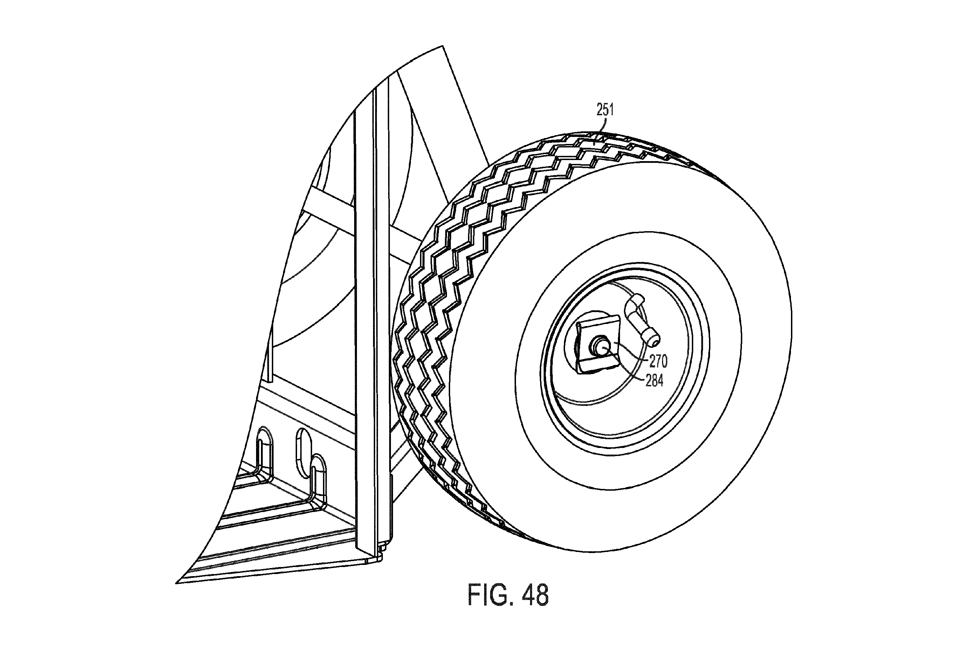

As the user continues to slide the clip **270,** the outward force that the axle's end piece **284** exerts on the clip's outwardly turned portion **273** causes the second clip portion **272** to bend away from the first clip portion **271** until the clip's outwardly turned portion **273** slides at least fully past the axle's end piece **284** allowing the biasing mechanism **279** to bias the second clip portion **272** back to the home position shown in FIG. 48. In the home position, at least a portion of the axle's end piece **284** is disposed within the clip's opening **274** and at least a portion of the second clip portion **272** that defines the clip's opening **274** engages an outside portion of the axle's end piece **284.** In particular embodiments, the clip's opening **274** and axle axle's end piece **284** are adapted to cooperate to maintain the clip **270** adjacent the axle's second end **280** when at least a portion of the axle's end piece **284** is disposed within the clip's opening **274**.

When the clip **270** is fully inserted on the axle's second end **280,** the clip **270** and the first and second protrusions **292, 294** are adapted to cooperate to maintain the first and second wheels **251, 252** adjacent a lower end of the hand truck **200** and are adapted to maintain the first and second wheels **251, 254** in a substantially fixed lateral position. When the wheel assembly **240** is fully assembled, the first and second wheels **251, 254** are substantially parallel (e.g., parallel) to one another and substantially perpendicular (e.g., perpendicular) to the axle **245**.

### Hand Truck Sales Description

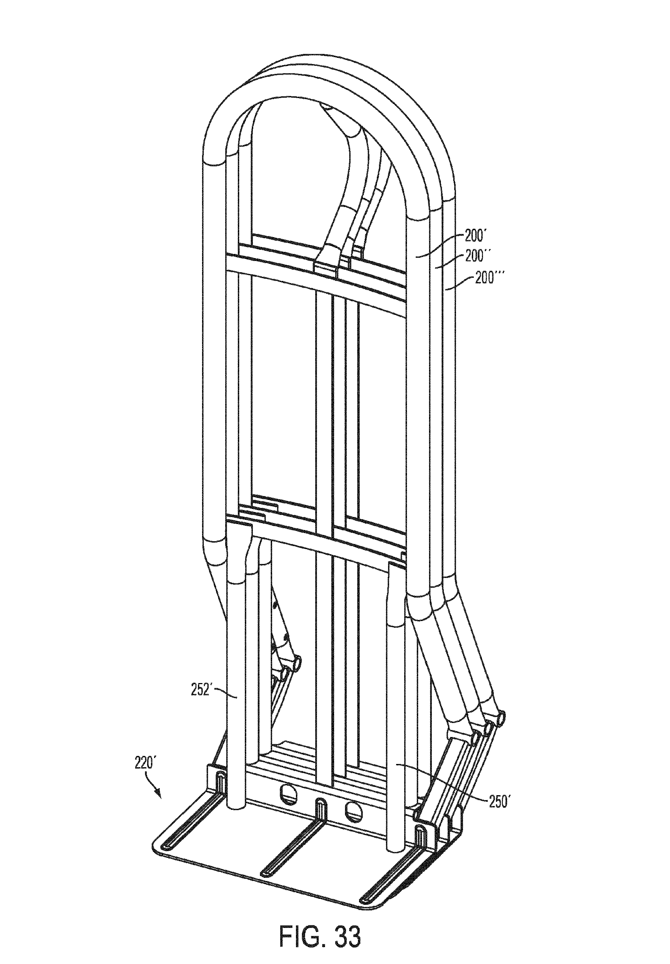

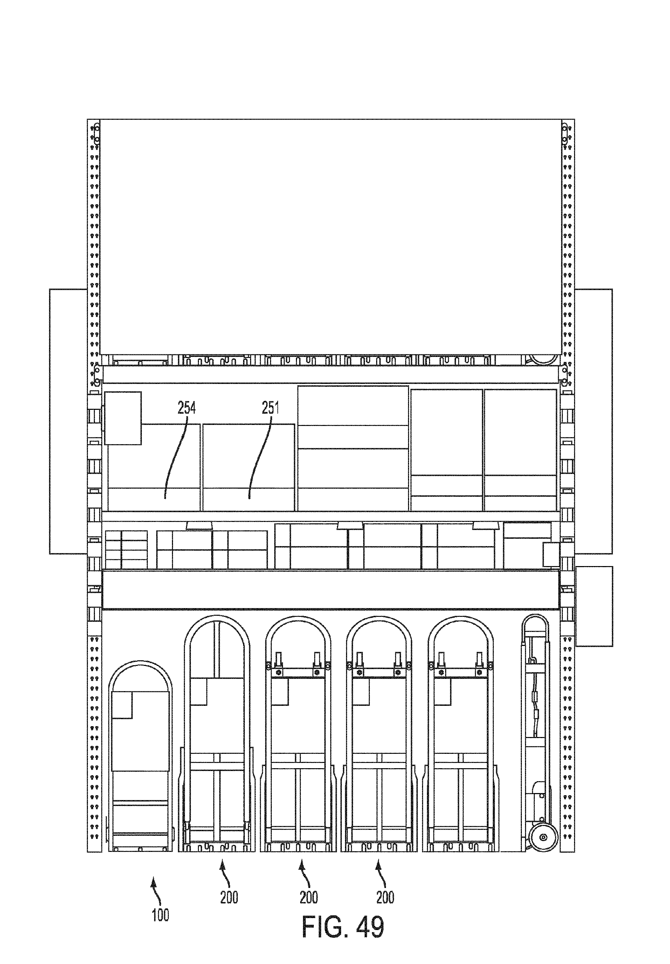

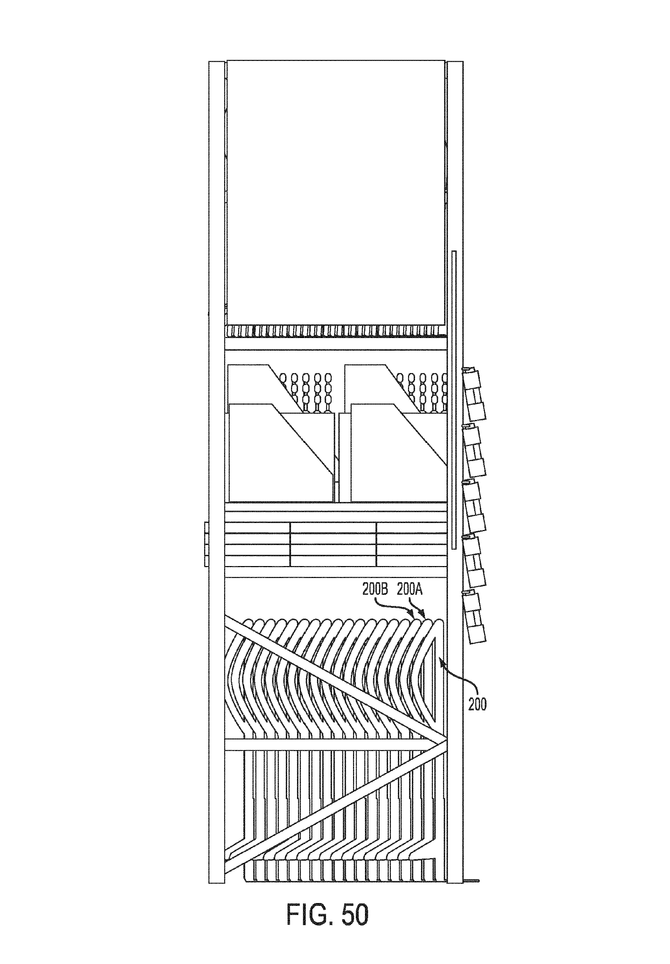

As shown in Figures 5, 11, 17, 23, 28, 31, and 33, when a plurality of hand truck bodies are positioned in a nesting relationship, the hand truck bodies fit in a compact space. This allows stores and other merchants selling hand trucks to display a plurality of hand trucks in a very limited amount of floor space. As shown in Figure 49, merchants may display hand trucks **100, 200** in a hand truck bay. Figure 50 shows a side view of an exemplary hand truck bay. As may be understood from Figure 50, various embodiments of a hand truck bay may include a plurality of hand truck frames **200, 200A-B** in a nested mating relationship. As shown in Figure 49, a hand truck bay may display several embodiments of hand trucks **100, 200** from which a purchaser may choose. In the embodiment of a hand truck bav shown in Figure 49, the hand truck bodies on display include the first exemplary hand truck body **100** and the second exemplary hand truck body **200**. The hand truck bay shown in Figure 49 further includes second and first wheel assemblies **251**, **254** that correspond to the available hand truck frames in the hand truck bay. When selecting a hand truck for purchase, a purchaser may follow the steps of: (1) examining the available hand truck embodiments displayed in the hand truck bay; (2) selecting a hand truck body from the hand truck bay; (3) moving the selected hand truck out of the nested relationship with like hand trucks in the hand truck bay; and (4) retrieving a corresponding set of wheels and an axle from the hand truck bay. The purchaser may them assemble the purchased hand truck by attaching the axle and pair of wheels to the hand truck body as described above.

### Conclusion

Many modifications and other embodiments of the invention will come to mind to one skilled in the art to which this invention pertains having the benefits of the teachings presented in the foregoing descriptions and the associated drawings. For example, as will be understood by one skilled in the relevant field in life of this disclosure, the invention may take form in a variety of different mechanical and operational configurations. Therefore, it is to be understood that the invention is not to be limited to the specific embodiments disclosed and that modifications and other embodiments are intended to be included within the scope of the appended exemplary concepts. Although specific terms are employed herein, they are used in a generic and descriptive sense only and not for the purposes of limitation.

In one embodiment, an assembly (for attaching a first wheel and a second wheel adjacent an object suitable for rolling movement when the object is at least partially supported by the first and second wheels) comprises: a first wheel locking means; and a second wheel locking means, wherein:
the first wheel locking means is adapted for maintaining the first wheel in a substantially fixed lateral position adjacent the object when the assembly is attached adjacent the object; and the second wheel locking means is adapted for maintaining the second wheel in a substantially fixed lateral position adjacent the object when the assembly is attached adjacent the object.

## Claims

1. An assembly for attaching a first wheel and a second wheel adjacent an object suitable for rolling movement when the object is at least partially supported by the first and second wheels, the assembly comprising:
an axle defining:
a first end that is adapted for supporting the first wheel when the assembly is attached adjacent the object; and
a second end that is adapted for supporting the second wheel
when the assembly is attached adjacent the object; and
a clip that is adapted to facilitate maintaining the second wheel in a substantially fixed lateral position adjacent the object in which the second wheel is rotatably connected adjacent the object, wherein:
the axle defines at least one axle recess adjacent the second end;
the clip comprises:
a first clip portion defining an elongated channel;
a second clip portion defining an opening in the second portion;
and
a biasing mechanism that is adapted for biasing the first clip portion toward a first position in which the opening is aligned with at least a portion of the elongated channel;
the clip is adapted to allow a user to use the clip to facilitate maintaining the second wheel in the substantially fixed lateral position by executing one or more steps including:
positioning the second wheel adjacent the at least one axle recess; and
after positioning the second wheel adjacent the at least one axle recess, sliding the clip adjacent the second end so that:
a portion of the clip defining the elongated channel engages at least a portion of the axle defining the recess; and
at least a portion of the second end is disposed within the opening.

2. The assembly of Claim 1, wherein the first clip portion is substantially planar.

3. The assembly of Claim 1 or 2, wherein the second clip portion is substantially planar.

4. The assembly of Claim 1, 2 or 3, wherein:
the first clip portion and the second clip portion are portions of a substantially continuous piece of material; and
the biasing mechanism comprises a rolled connection between the first clip portion and the second clip portion.

5. The assembly of any preceding claim, wherein the second clip portion comprises an outwardly turned portion that is adapted for facilitating the sliding of the second clip portion adjacent the second end, wherein:
the second end is adapted to exert a force on the outwardly turned portion as the user slides the clip onto the second end; and
the force causes the movement of the second clip portion away from the first clip portion as the user slides the clip onto the second end.

6. The assembly of Claim 5, wherein at least a portion of the second end extends through the opening in the second clip portion when the outwardly turned portion slides past the second end.

7. The assembly of any preceding claim,wherein:
the at least one axle recess defines a plurality of recesses; and
at least a portion of the clip that defines the elongated channel engages at least a portion of the plurality of recesses when the user slides the clip adjacent the second end, and preferably wherein the axle defines the recesses on opposing sides of the axle.

8. The assembly of any preceding claim,
wherein the first end of the axle comprises at least one protrusion, wherein the at least one protrusion and the clip are adapted to cooperate to maintain the assembly in place when the assembly is supporting the first wheel and the second wheel adjacent the object; and preferably
wherein, when the assembly is supporting the first wheel and the second wheel adjacent the object, at least a portion of the at least one protrusion engages at least a portion of the first wheel; and preferably
wherein:
the first end of the axle comprises a plurality of protrusions; and
when the assembly is supporting the first wheel and the second wheel adjacent the object, at least a portion of the plurality of protrusions engages at least a portion of the first wheel.

9. The assembly of Claim 8, wherein the protrusions are disposed on opposing sides of the axle.

10. The assembly of any preceding claim, wherein the assembly is adapted to allow the user to install the assembly adjacent the object substantially without the use of tools.

11. The assembly of any preceding claim, wherein:
at least a portion of the clip that defines the opening engages at least a portion of the second end when the at least a portion of the second end is disposed within the opening; and
the second end is adapted to maintain the clip adjacent the second end when the at least a portion of the second end is disposed within the opening.

12. The assembly of any preceding claim, wherein
the first wheel and the second wheel are substantially parallel and spaced apart when the assembly is supporting the first wheel and the second wheel adjacent the object; and/or
the first wheel and the second wheel are substantially perpendicular to the axle when the assembly is supporting the first wheel and the second wheel adjacent the object.

13. The assembly of any preceding claim, wherein the object is a hand truck.

14. A method of attaching a first wheel and a second wheel adjacent an object suitable for rolling movement using an axle assembly, when the object is at least partially supported by the first and second wheels, the axle assembly comprising:
(a) an axle defining a first end that is adapted for supporting the first wheel and a second end that defines at least one axle recess and is adapted for supporting the second wheel; and
(b) a clip comprising a first clip portion defining an elongated channel, a second clip portion defining an opening in the second portion, and a biasing mechanism that is adapted for biasing the first clip portion toward a first position in which the opening is aligned with at least a portion of the elongated channel, wherein:
the clip is adapted to facilitate maintaining the second wheel in a substantially fixed lateral position adjacent the object in which the second wheel is rotatably connected adjacent the object;
the method comprising the steps of:
positioning the first wheel adj acent the first end such that the first end supports the first wheel adjacent the object;
positioning the second wheel adjacent the at least one axle recess; and
sliding the clip adjacent the second end such that:
a portion of the clip defining the elongated channel engages at least a portion of the axle recess; and
at least a portion of the second end is disposed within the opening.

15. The method of Claim 14, wherein:
the first end comprises at least one protrusion; and
the method further comprises the step of placing the first wheel adjacent the first end such that at least a portion of the at least one protrusion engages at least a portion of the first wheel.
